(19) Europäisches Patentamt
European Patent Office
Office européen des brevets

(11) EP 1 578 137 A2

(12) EUROPEAN PATENT APPLICATION

(43) Date of publication:
**21.09.2005 Bulletin 2005/38**

(51) Int Cl.[7]: **H04N 7/36**

(21) Application number: **05005220.8**

(22) Date of filing: **10.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **17.03.2004 JP 2004076049**

(71) Applicant: **MATSUSHITA ELECTRIC INDUSTRIAL CO., LTD.**
**Osaka 571-8501 (JP)**

(72) Inventors:
- **Komiya, Daisaku**
  **Yokohama-shi Kanagawa, 230-0024 (JP)**
- **Shibahara, Youji**
  **Sakai-shi Osaka, 591-8021 (JP)**
- **Kadono, Shinya**
  **Nishinomiya-shi Hyogo, 662-0871 (JP)**

(74) Representative:
**Pautex Schneider, Nicole Véronique et al**
**Novagraaf Internatinal SA**
**25, Avenue du Pailly**
**1220 Les Avanchets - Geneva (CH)**

(54) **Moving picture coding apparatus with multistep interpolation process**

(57) A motion vector estimation circuit (101) interpolates, with sub-pixel precision, a prediction block indicated by a motion vector estimated with integer-pixel precision as well as a region around the prediction block within a search area in a reference picture, using a 2-tap pixel interpolator (605), and estimates two or more motion vectors indicating positions of prediction blocks having high correlation with a current block to be coded, within the interpolated region. A motion compensation circuit (102) interpolates, with sub-pixel precision, each of the prediction blocks indicated by the estimated motion vectors, using a 6-tap pixel interpolator (901), compares the coding costs of the interpolated prediction blocks, and determines a motion vector indicating a position of a prediction block having highest correlation with the current block, from among the estimated motion vectors. As mentioned above, the number of motion vector candidates is narrowed down by sub-pixel precision motion prediction using a reference image created by a 2-tap filter, and then motion compensation is performed on these motion vector candidates using a 6-tap filter. Therefore, it becomes possible to achieve moving picture compression performance as high as sub-pixel precision motion prediction using a reference image created by a 6-tap filter.

EP 1 578 137 A2

## Description

## BACKGROUND OF THE INVENTION

### (1) Field of the Invention

The present invention relates to a moving picture coding apparatus, and particularly to a moving picture coding apparatus that allows efficient motion estimation of sub-pixel precision in LSI, software or the like for coding moving pictures with limited resources.

### (2) Description of the Related Art

In recent years, digital contents have become widely used as computer performance has improved and Internet communication capacity has been increased. As for recording of a moving picture (video) that is a sequence of still pictures, digital DVD has replaced analog VHS on an accelerated basis. A video sequence contains an enormous amount of information, and thereby techniques to compress the video size are essential to handle video information as digital data. In digital video contents, information is compressed by coding. Such video compression techniques have already been used for various products. For example, MPEG-2 is used as a coding method in DVD recorders, while MPEG-4 is used in mobile phones used as videophones.
It is expected that video-related applications will increasingly expand. If usage of a camera-equipped mobile phone as a video player becomes popular, demand for storing video data in a memory medium such as an SD card will grow. Also, it might become popular to download via the Internet and view streaming high definition video data for large-sized screens, such as movies. Such applications have, in common, a strong demand for enhanced video compression performance. In other words, if video compression performance is enhanced, it becomes possible to record video data for a longer period of time in a storage medium with the same capacity or to transmit higher quality video data in the same network frequency band.
Against this backdrop, Moving Picture Experts Group (MPEG) and International Telecommunications Union - Telecommunication Standardization Sector (ITU-T) formed Joint Video Team (JVT) to finalize the next-generation codec standardization for more efficient compression and coding, and MPEG-4 AVC/H.264 has now been standardized. This standard is hereinafter referred to as MPEG-4 AVC. MPEG-4 AVC is stick to the conventional hybrid encoder structure that employs motion compensation using temporal correlation between pictures and frequency transform for using spatial correlation. However, it achieves double the coding efficiency of the conventional standards (such as ITU-T H.263 and MPEG-4) by introducing several new tools therein and optimizing the existing tools. Here, a picture denotes a frame or a field.
MPEG-4 AVC achieves enhanced compression performance for video coding, while it requires an enormous amount of computation. Therefore, in the case where the MPEG-4 AVC processing is implemented in an LSI, its circuit size is increased or more power is consumed due to increase in operation cycles. Such increase in circuit size causes not only a rise in LSI's price, but also an increase in space occupied by the LSI, which is inappropriate for a small-size and light-weight mobile device. In addition, an increase in power consumption causes a significant decrease in operating time of a battery-driven device. On the other hand, in the case where MPEG-4 AVC processing is implemented as software, an increase in power consumption requires a CPU that is capable of performing a huge amount of computation at a very high speed, or causes a significant increase in processing time.
FIG. 1 shows one example of a hybrid coding apparatus which is used in compliance with the conventional MPEG standards including MPEG-4 AVC. A description is given below, with reference to FIG. 1, for the internal structure of a conventional moving picture coding apparatus. The moving picture coding apparatus includes: an input unit 2001 that receives the inputted moving pictures; a motion vector estimation circuit 2002 used for inter-picture motion prediction; a motion compensation circuit 2004 used for creation of prediction images; a subtraction circuit 2003; an orthogonal transformation circuit 2007; a quantizer 2008; an inverse quantizer 2010; an inverse orthogonal transformation circuit 2011; an addition circuit 2006; a reference picture memory 2005 that holds reference pictures used for inter-picture motion prediction; a coding unit 2012 that assigns corresponding codes to a series of information; an output unit 2009 that partitions the coded bit information into blocks of an appropriate size and outputs them outside.
Next, a description is given, with reference to the flowchart of FIG. 2, for the overview of the operation of the conventional moving picture coding apparatus.
Step 2301: The input unit 2001 reads a current picture to be coded one after another from an external memory. When there remains no picture to be read out in the external memory, the input unit 2001 terminates its operation. It partitions each of the read pictures into N pixel blocks called macroblocks.
Step S2302: Then, the input unit 2001 transmits the macroblocks, in ascending order of macroblock numbers from 1 up to N, to the motion vector estimation circuit 2002 and the subtraction circuit 2003. When completing transmission of these N macroblocks, it starts reading a new picture again (to Step 2301).

Step 2303: The motion vector estimation circuit 2002 reads, from the reference picture memory 2005, search areas on reference pictures that correspond to the nth macroblock, and performs motion prediction processing. Here, the motion vector estimation circuit 2002 estimates motion vectors based on block matching of sub-pixel precision using a 6-tap filter to be described later. Then, the motion vector estimation circuit 2002 outputs, to the motion compensation circuit 2004, the motion vectors corresponding to the nth macroblock which are obtained by the motion estimation. At the same time, the motion vector estimation circuit 2002 outputs the motion vectors to the coding unit 2012. The images of the reference pictures are stored in the reference picture memory 2005.

Step S2304: The motion compensation circuit 2004 obtains the pixel values of the reference picture stored in the reference picture memory 2005 based on the motion vector obtained from the motion vector estimation circuit 2002. Then, it generates a prediction image of the same shape and equal size as the nth macroblock through pixel interpolation, and outputs it to the subtraction circuit 2003 and the addition circuit 2006.

Step S2305: To the subtraction circuit 2003, not only the image data of the nth macroblock in the current picture to be coded is transmitted from the input unit 2001, but also the image data of the corresponding area in the reference picture performed of motion compensation by the motion compensation circuit 2004 is transmitted. The subtraction circuit 2003 subtracts the image data of the corresponding area in the reference picture from the image data of the nth macroblock in the current picture so as to calculate the difference data. This difference data is transmitted to the orthogonal transformation circuit 2007.

Step 2306: The orthogonal transformation circuit 2007 performs orthogonal transformation on the difference data. As such orthogonal transformation, discrete cosine transform (DCT) is used, for example. The transformation coefficients obtained by the orthogonal transformation circuit 2007 are transmitted to the quantizer 2008. The quantizer 2008 quantizes the transformation coefficients. The quantizer 2008 outputs the quantization values used for the quantization processing and the quantized transformation coefficients to the coding unit 2012 and the inverse quantizer 2010.

Step 2307: The inverse quantizer 2010 performs inverse quantization based on the received quantization values and transformation coefficients. Then, the inverse orthogonal transformation circuit 2011 performs inverse frequency transform such as inverse DCT so as to reconstruct the difference data for the nth macroblock outputted from the subtraction circuit 2003, and outputs the reconstructed difference data to the addition circuit 2006.

Step 2308: The image data of the reference picture which is performed motion compensation, namely the prediction image data, is transmitted from the motion compensation circuit 2004 to the addition circuit 2006. The reconstructed difference data is added to this prediction image data so as to obtain the image data of the current picture to be coded. This image data of the current picture is stored, as a reference picture to be used for the following coding, into the location corresponding to the macroblock number n in the reference picture memory 2005.

Step 2309: The coding unit 2012 codes the quantization values and quantized transformation coefficients transmitted from the quantizer 2008, the motion vectors transmitted from the motion vector estimation circuit and the like. As a method for such coding, Context-Adaptive Variable Length Coding (CAVLC), Context-Adaptive Binary Arithmetic Coding (CABAC), or the like can be used. The coding unit 2012 transmits the coded bit information to the output unit 2009.

Step 2310: The output unit 2009 stores the bit information received from the coding unit 2012 into a buffer not shown in the diagram, and packetizes it according to a predetermined partitioning method. The partitioning method is determined depending on the application purpose of transmitting the bit information to a network, storing into a storage medium, or the like. When all the processing on the nth macroblock is completed, the processing on the n+lth macroblock is performed next (to Step 2302).

The conventional moving picture coding apparatus codes inputted pictures in the above manner. The input unit 2001 reads the pictures one after another in time order. Alternatively, it can read the pictures in another order. In this case, the temporally subsequent pictures are read earlier than the temporally preceding pictures in the order of, for example, 0, 3, 1, 2, 6, 4, 5, 9, 7, 8, .... Previously coded pictures are stored, as reference pictures, into the reference picture memory 2005, and become available through inter-picture predictive coding. In the motion prediction processing, pictures are categorized into two types depending on the reference pictures that are available for them. Pictures that are predicted from only the reference pictures that come temporally before them are called P-pictures, while pictures that can be predicted from the reference pictures that come temporally before and after them are called B-pictures. Pictures to be used as reference pictures are stored in the reference picture memory 2005 for an appropriate period of time, and can be accessed by the motion vector estimation circuit 2002 and the motion compensation circuit 2004.

In the highly efficient coding apparatus as shown in FIG. 1, the processing of estimating motion vectors in the motion vector estimation circuit 2002 usually bears the highest load. According to inter-picture motion prediction in MPEG, a picture is partitioned into blocks and motion compensation is performed on a block-by-block basis. This is also used in ITU-T H.261 that is the international standard of motion picture coding for videophones. Such block-by-block motion compensation is commonly performed based on motion vector estimation using block matching. FIG. 3 is a diagram for explaining block matching. In FIG. 3, 2101 denotes a current picture to be coded and 2102 denotes a reference picture. The current picture to be coded 2101 is partitioned into blocks, and search is performed, on a block-by-block basis, within a search area 2106 in the reference picture 2102. An arbitrary-sized search area 2106 can be specified. In the case where a block 2103 is an object block (current block), block matching is performed in such a manner that a block which is most similar to the object block is searched within the search area 2106 and a prediction block 2104 is estimated as the most correlated block. The similarity between the blocks is evaluated based on the sum of absolute difference (SAD). However, the similarity does not always need to be evaluated based on SAD, and it may be evaluated based on the SAD transform (SADT) that is the orthogonal-transformed SAD. The relative position difference between the prediction block 2104 and the object block 2103 is represented by a motion vector 2105. The motion vector estimation circuit 2002 estimates motion vectors based on the above-mentioned block matching.

In order to improve the precision of motion vectors estimated by block matching and to enhance the coding efficiency in inter-picture motion prediction, the motion vector estimation circuit 2002 has conventionally estimated motion vectors with sub-pixel precision. The motion vector estimation of sub-pixel precision is a method that conforms to the above-mentioned block matching. To be more specific, non-integer pixel values are generated on a coordinate plane by interpolating the pixel values in the reference picture 2102 so as to construct a high resolution reference image, and motion estimation is performed using such a high resolution reference image. As a result, a prediction block which is more correlated with an object block could be generated, and therefore further enhanced coding efficiency is achieved.

FIG. 4 is a diagram for explaining a common processing for motion prediction of sub-pixel precision, and shows the details of the pixels that constitute the search area 2106 in FIG. 3. In the search area 2106, circles (○) indicate integer pixel values 2502, and a prediction block 2501 of integer-pixel precision is obtained as a result of motion prediction of integer-pixel precision performed by the motion vector estimation circuit 2002. Next, the motion vector estimation circuit 2002 interpolates the pixel values in the search area in order to predict motion with sub-pixel precision around the prediction block 2501. Crosses ( x ) indicate the sub-pixels obtained by pixel interpolation of 1/2 pixel precision of the search area using an interpolation filter. The motion vector estimation circuit 2002 performs motion prediction using the search area of 1/2 pixel precision and obtains a prediction block of 1/2 pixel precision and motion vectors. It further performs pixel interpolation of the search area, using a 1/4 pixel interpolation filter, around the prediction block obtained by the 1/2 pixel motion prediction, and performs motion prediction with 1/4 pixel precision using the 1/4 sub-pixels not shown in the diagram. As a result, the prediction block 2104 and motion vector 2105 are finally obtained as shown in FIG. 3. In FIG. 4, interpolation is performed on a range including only eight surrounding pixels adjacent to each side of the prediction block 2501 obtained by motion prediction of integer-pixel precision. However, it is possible to interpolate an arbitrarily larger range as a search area for motion prediction of sub-pixel precision. In addition, although motion prediction is performed with up to 1/4 pixel precision in FIG. 4, it is also possible to perform motion prediction with an arbitrarily higher precision.

When performing motion estimation with such sub-pixel precision, the motion vector estimation circuit 2002 needs to perform the following processing in addition to the normal motion estimation: (1) creating a reference image with higher resolution; and (2) estimating a motion vector from a reference image with higher resolution and having a wider search range. In MPEG-2, linear interpolation is performed using a 2-tap filter for the purpose of achieving the above (1). In MPEG-4 AVC, a reference image is generated using a 6-tap filter. In more detail, interpolated values of 1/2 pixel precision are firstly generated using a 6-tap filter, and further interpolated values of 1/4 pixel precision are generated from the pixels of 1/2 precision using a 2-tap filter.

FIG. 5 shows integer pixels and sub-pixels in a reference image. A description is given for the difference between pixel interpolation using a 2-tap filter and that using a 6-tap filter, with reference to FIG. 5. In the reference image, integer pixels 2201 represented by heavy-line circles (O) and sub-pixels of 1/2 pixel precision represented by thin-line circles (O) are arranged evenly spaced apart, although pixels irrelevant to the description are not shown in the diagram. The use of these sub-pixels allows enhanced resolution of the reference image. A 2-tap filter performs linear interpolation using two pixels, while a 6-tap filter performs interpolation using six pixels. Focusing on a sub-pixel c here, the 2-tap filter generates the pixel c using pixels G and H, while the 6-tap filter generates the pixel c using pixels E, F, G, H, I and J.

A sub-pixel is generated using these 2-tap filter and 6-tap filter according to the following equations. Here, w1 to w6 are coefficients that determine the shapes of the 6-tap filter, namely, the weights of the pixels.

* Pixel interpolation using 2-tap filter:

$$c = (G+H+1)/2$$

$$f = (G+M+1)/2$$

$$g = (f+h+1)/2 = (G+H+M+N+2)/4$$

* Pixel interpolation using 6-tap filter:

$$c = (w1 \times E + w2 \times F + w3 \times G + w4 \times H + w5 \times I + w6 \times J + (W/2))/W$$

$$f = (w1 \times A + w2 \times C + w3 \times G + w4 \times M + w5 \times R + w6 \times T + (W/2))/W$$

$$g = (w1 \times d + w2 \times e + w3 \times f + w4 \times h + w5 \times i + w6 \times j + (W/2))/W$$

$$W = w1+w2+w3+w4+w5+w6$$

As is clear from the above equations, a 6-tap filter that predicts a sub-pixel using six pixels achieves more accurate pixel interpolation than a 2-tap filter. On the other hand, pixel interpolation using a 6-tap filter significantly increases the number of additions and multiplications for generating a single sub-pixel, and therefore increases the load of computation. In addition, an increase in the number of pixels which are referred to for the computation causes an increase in the number of accesses to the memory.

Against this backdrop, a technique has been considered for reducing the amount of computation to be performed and therefore reducing the circuit size without degrading the performance of motion prediction of sub-pixel precision. For example, Japanese Laid-Open Patent Application No. 7-162868 Publication (Patent Document 1) describes a method for narrowing down search ranges for motion prediction of sub-pixel precision by performing multistage motion predictions, and therefore reducing an amount of computation. Japanese Laid-Open Patent Application No. 7-95585 Publication (Patent Document 2) describes a method for reducing an amount of computation for generating a high-resolution reference image as well as reducing an amount of computation for searching a motion vector, by performing, in motion prediction of sub-pixel precision, pixel interpolation in the vertical and horizontal directions only and performing no pixel interpolation in the slanting direction. Furthermore, Japanese Laid-Open Patent Application No. 2003-348595 Publication (Patent Document 3) describes a method for reducing redundant computation by a 6-tap filter for creating search areas of each block when performing motion prediction of sub-pixel precision, by storing, in a memory, interpolated reference image data of sub-pixel precision for one picture generated by the 6-tap filter. FIG. 6 shows a structure of a moving picture coding apparatus disclosed in Patent Document 3. An image generation unit 2401 and a high-resolution reference picture memory 2402 are not included in the conventional moving picture coding apparatus as shown in FIG. 1, and interpolated image data for one picture is stored in the high-resolution reference picture memory 2402.

However, neither Patent Document 1 nor Patent Document 2 discloses reduction of an amount of computation required for generating a reference image using a 6-tap filter when performing motion prediction of sub-pixel precision. Furthermore, the method disclosed in Patent Document 3 reduces an amount of redundant computation by a 6-tap filter for generating sub-pixels, but in fact requires computation of a range which is not used for search when performing motion prediction of sub-pixel precision in order for the picture generation unit 2401 to generate the entire interpolated image for one picture. A further disadvantage of the method of Patent Document 3 is that it needs, as a new constituent element, the high-resolution reference picture memory of high capacity for holding high-resolution reference images which have been interpolated using a 6-tap filter.

## SUMMARY OF THE INVENTION

It is an object of the present invention to maintain high compression performance just as conventional motion prediction of sub-pixel precision using a reference image interpolated by a 6-tap filter, without adding a newly required memory while keeping an amount of computation performed by the motion vector estimation circuit 2002 below the conventional level.

In order to achieve this object, the moving picture coding apparatus of the present invention includes: a motion vector estimation unit operable to interpolate, with sub-pixel precision, a predetermined region within a search area in a reference picture, using a first filter, and to estimate two or more motion vectors indicating positions of prediction blocks having high correlation with a current block to be coded, within the interpolated region; and a motion vector determination unit operable to interpolate, with sub-pixel precision, each of the prediction blocks indicated by the estimated motion vectors, using a second filter having a larger number of taps than the first filter, and to determine, based on difference data between each of the interpolated prediction blocks and the current block, a motion vector indicating a position of a prediction block having highest correlation with the current block, from among the motion vectors estimated by the motion vector estimation unit.

In other words, according to the moving picture coding apparatus of the present invention, the motion vector estimation unit generates sub-pixels using a 2-tap filter, and performs motion prediction of sub-pixel precision using the generated reference image so as to narrow down the number of motion vectors, the motion vector determination unit performs motion compensation on these two or more motion vectors using a 6-tap filter so as to generate prediction blocks, and compares the coding costs (which is also called "evaluation costs") of these motion-compensated prediction blocks, so that it becomes possible to achieve high compression performance just as conventional motion prediction of sub-pixel precision using a reference image created by a 6-tap filter, without adding a newly required memory while keeping an amount of computation below the conventional level. Note that a coding cost is a value which is obtained based on the difference image data between a prediction block and a current (object) block, and indicates a degree of lowness of correlation between the prediction block and the current block.

It is also possible that the second sub-pixel precision motion vector estimation unit estimates two or more motion vectors as candidates for each of the forward motion vector and the backward motion vector, the motion vector determination unit further includes a second coding cost calculation unit operable to calculate a second coding cost based on difference data between the current block and each of the prediction blocks after each prediction block is interpolated with sub-pixel precision using the second filter, the second coding cost indicating that correlation between each prediction block and the current block becomes higher as a value of the second coding cost becomes smaller, and in the case where the direction determination unit determines that the prediction direction of the current block is unidirectional, the motion vector determination unit determines, based on the second coding cost, a motion vector indicating a position of a prediction block having highest correlation with the current block, from among the estimated motion vector candidates either for the forward motion vector or the backward motion vector.

According to this configuration, it becomes possible to output two or more motion vector candidates to the motion vector determination unit and to select, from among these candidates, the motion vector indicating the position of the prediction block that shows the highest correlation with the current block, irrespective of the prediction direction of the current block judged by the direction determination unit.

Alternatively, the first filter may interpolate an area in a reference picture by linear interpolation. By performing linear interpolation using the first filter, it becomes possible to interpolate pixels with a small amount computation.

It is also possible that the motion vector determination unit selects a motion vector indicating a position of a prediction block with a smallest second coding cost, and determines: (i) the motion vector from among the estimated forward motion vector candidates in the case where the direction determination unit determines that the prediction direction of the current block is forward, and (ii) the motion vector from among the estimated backward motion vector candidates in the case where the direction determination unit determines that the prediction direction of the current block is backward.

Furthermore, it is also possible that the moving picture coding apparatus further include an average image generation unit operable to generate an average image of the forward prediction block and the backward prediction block in the case where the direction determination unit determines that the prediction direction of the current block is bidirectional, wherein the second sub-pixel precision motion vector estimation unit estimates at least a first motion vector and a second motion vector as candidates for each of the forward motion vector and the backward motion vector, the first motion vector indicating a position of a prediction block having highest correlation with the current block, and the second motion vector indicating a position of a prediction block having second highest correlation with the current block, in the case where the direction determination unit determines that the prediction direction of the current block is bidirectional, the motion vector determination unit determines that each of the first forward motion vector and the first backward motion vector is the motion vector, and the average image generation unit generates an average image of a prediction block indicated by the first forward motion vector and a prediction block indicated by the first backward motion vector, each of the first forward motion vector and the first backward motion vector being determined to be the motion vector by the motion vector determination unit.

According to this configuration, it becomes possible to determine that all the motion vector candidates are forward when the direction determination unit judges the prediction direction of the current block to be forward, all the motion vector candidates are backward when it judges to be backward, and one motion vector is forward and the other motion vector is backward when it judges to be bidirectional. It also becomes possible for the motion vector determination unit to select, based on the second coding cost, the optimum motion vector from among the motion vector candidates. Furthermore, the second coding cost calculation unit makes it possible to select, from the motion vector candidates, the motion vector that is identical to the motion vector which is obtained as a result of motion prediction of sub-pixel precision using a reference image interpolated by a 6-tap filter.

According to the present invention, in the case where motion estimation of sub-pixel precision is performed using a reference image interpolated by a 6-tap filter, it is possible to reduce an amount of computation required for motion compensation processing without lowering the precision of motion vector estimation nor adding a memory for holding high-resolution reference images.

Note that the present invention can be embodied not only as the above-mentioned moving picture coding apparatus but also as a moving picture coding method including, as steps, the characteristic units included in the moving picture coding apparatus. Or, the present invention can be embodied as a program causing a computer to execute those steps. It is needless to say that the program can be distributed via a recording medium such as a CD-ROM and a transmission medium such as the Internet.

As further information about technical background to this application, the disclosure of Japanese Patent Application No. 2004-076049 filed on March 17, 2004 including specification, drawings and claims is incorporated herein by reference in its entirety.

## BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:

FIG. 1 is a block diagram showing one example of a structure of a hybrid moving picture coding apparatus used for a conventional MPEG system;
FIG. 2 is a flowchart showing a flow of processing performed by a conventional moving picture coding apparatus;
FIG. 3 is an explanatory diagram of a common block matching method;
FIG. 4 is an explanatory diagram of a search area for common motion prediction of sub-pixel precision;
FIG. 5 is an explanatory diagram showing integer pixels and sub-pixels in a reference image and how to generate such sub-pixels using a 6-tap filter;
FIG. 6 is a block diagram showing a structure of a moving picture coding apparatus disclosed in Japanese Laid-Open Patent Application No. 2003-348595 Publication;
FIG. 7 is a block diagram showing a structure of a moving picture coding apparatus in a first embodiment of the present invention;
FIG. 8 is a flowchart showing a flow of coding processing performed by the moving picture coding apparatus in the first embodiment;
FIG. 9 is a block diagram showing a structure of a motion vector estimation circuit of the moving picture coding apparatus in the first embodiment;
FIG. 10 is a flowchart showing a flow of motion prediction processing performed in the motion vector estimation circuit of the moving picture coding apparatus in the first embodiment;
FIG. 11 is a block diagram showing a structure of a motion compensation circuit of the moving picture coding apparatus in the first embodiment;
FIG. 12 is a flowchart showing a flow of motion compensation processing performed in the motion compensation circuit of the moving picture coding apparatus in the first embodiment;
FIG. 13 is a diagram showing that unidirectional prediction and bidirectional prediction are switched based on judgment from coding costs of motion vectors estimated using a 2-tap filter, and in the case of unidirectional prediction, motion prediction can be performed with respect to two motion vectors using a 6-tap filter;
FIG. 14 is a block diagram showing a structure of a motion vector determination unit of the moving picture coding apparatus in the first embodiment;
FIG. 15 is a flowchart showing a flow of processing performed by the motion vector determination unit of the moving picture coding apparatus in the first embodiment;
FIG. 16 is a flowchart showing a flow of motion vector estimation performed by the moving picture coding apparatus in the first embodiment;
FIG. 17A shows one example of a physical format of a flexible disk as a main unit of a storage medium, FIG. 17B shows a front view of the appearance of the flexible disk, a cross-sectional view thereof and the flexible disk itself, and FIG. 17C shows a configuration for recording and reproducing a program on and from the flexible disk FD;
Fig. 18 is a block diagram showing an overall configuration of a content supply system that realizes a content distribution service;
Fig. 19 is a diagram showing a mobile phone that uses a moving picture coding method and a moving picture decoding method as described in the first embodiment;
Fig. 20 is a block diagram showing a structure of the mobile phone; and
Fig. 21 is a diagram showing one example of a digital broadcasting system.

## DESCRIPTION OF THE PREFERRED EMBODIMENT(S)

A detailed description is given for the embodiments of the present invention with reference to the drawings. The present invention is not limited to these embodiments, and various changes and modifications may be made without departing from the spirit and scope of the invention.

### (First Embodiment)

A description is given for a moving picture coding apparatus in the first embodiment of the present invention. The moving picture coding apparatus of the present invention is an apparatus that receives a moving picture signal as an input signal, codes pictures and outputs coded information. It has a wide range of applicability in a combination with a video storage apparatus or a video transmission apparatus.

FIG. 7 is a block diagram showing the structure of the moving picture coding apparatus in the first embodiment of the present invention. The same reference numbers are assigned to the constituent elements which perform the same operations as the constituent elements of the conventional moving picture coding apparatus shown in FIG. 1. The moving picture coding apparatus in the present embodiment narrows the search for motion vectors within search areas which are previously generated by a 2-tap filter, and as for these motion vector candidates obtained as a result of the search, finally performs motion compensation using prediction blocks of sub-pixel precision interpolated using a 6-tap filter. The moving picture coding apparatus includes a motion vector estimation circuit 101, a motion compensation circuit 102, a motion vector determination unit 103, a subtraction circuit 2003, a reference picture memory 2005, an addition circuit 2006, an orthogonal transformation circuit 2007, a quantizer 2008, an output unit 2009, an inverse quantizer 2010, an inverse orthogonal transformation circuit 2011 and a coding unit 2012. In this moving picture coding apparatus, the motion vector estimation circuit 101, the motion compensation circuit 102 and the motion vector determination unit 103 are the constituent elements that operate differently from the conventional ones.

FIG. 8 is a flowchart showing the operations of the moving picture coding apparatus in the present embodiment. A description is given here only for the operations different from the operations of the conventional moving picture coding apparatus shown in FIG. 2.

Step 203: In the case of motion prediction of sub-pixel precision, the conventional motion vector estimation circuit estimates a motion vector using search areas generated by a 6-tap filter, while the motion vector estimation circuit 101 in the present embodiment estimates a motion vector using search areas generated by a 2-tap filter. Furthermore, the conventional motion vector estimation circuit outputs a motion vector to the coding unit 2012 after estimating the motion vector (Step 2302 in FIG. 2), while the motion vector estimation circuit 101 in the present embodiment does not output a motion vector to the coding unit 2012.

Step 204: The motion vector estimation circuit 101 in the present embodiment outputs, to the motion compensation circuit 102, two or more motion vectors estimated using the search areas generated using the 2-tap filter.

Step 205: The motion compensation circuit 102 in the present embodiment performs motion compensation on the respective motion vectors inputted from the motion vector estimation circuit 101, generates two or more prediction images using a 6-tap filter, and outputs them to the subtraction circuit 2003 and the motion vector determination unit 103. At the same time, the motion compensation circuit 102 outputs these motion vectors used for generation of the prediction images to the motion vector determination unit 103.

Step 206: The subtraction circuit 2003 performs subtractions in sequence on the current picture to be coded inputted from the input unit 2001 and the two or more prediction images inputted from the motion compensation circuit 102, so as to generate difference image data. These difference image data are inputted sequentially into the motion vector determination unit 103.

Step 207: The motion vector determination unit 103 calculates the coding costs of the difference image data inputted from the subtraction unit 2003, determines the motion vector with the smallest coding cost, and outputs it to the coding unit 2012. At the same time, the motion vector determination unit 103 outputs the prediction image corresponding to that motion vector to the addition circuit 2006, while it outputs its difference image data value to the orthogonal transformation circuit 2007. Since the following Steps 208 to 212 are same as Steps 2306 to 2310 as described in FIG. 2, the description thereof is not repeated here.

Next, a detailed description is given for the structure and operation of the motion vector estimation circuit 101 with reference to the diagrams.

FIG. 9 is a block diagram showing the internal structure of the motion vector estimation circuit 101 shown in FIG. 7. The motion vector estimation circuit 101 is a circuit that estimates two or more motion vectors using search areas generated by a 2-tap filter. It includes a forward reference image buffer 601, a backward reference image buffer 602, a forward motion estimation unit (forward ME) 603, a backward motion estimation unit (backward ME) 604, a 2-tap image interpolator 605, a macroblock buffer 606, a motion vector direction determination unit 607, a forward motion vector buffer 608 and a backward motion vector buffer 609. The forward reference image buffer 601 is a buffer that holds search areas in forward reference pictures. The backward reference image buffer 602 is a buffer that holds search areas in backward reference pictures. The forward ME 603 performs motion prediction using a current macroblock held in the macroblock buffer 606 and search areas held in the forward reference image buffer 601. The backward ME 604 performs motion prediction using a current macroblock held in the macroblock buffer 606 and search areas held in the backward reference image buffer 602. The 2-tap image interpolator 605 performs interpolation of a reference image using a 2-tap filter. The macroblock buffer 606 holds macroblocks of a current picture to be coded. The forward motion vector buffer 608 holds candidates for forward motion vectors. The backward motion vector buffer 609 holds candidates for backward motion vector. The motion vector direction determination unit 607 determines the direction of a motion vector based on the coding cost obtained as a result of the motion prediction processing.

FIG. 10 is a flowchart showing a flow of motion prediction processing performed in the motion vector estimation circuit of the moving picture coding apparatus in the first embodiment. With reference to the flowchart in FIG. 10, a detailed description is given for the internal operations of the motion vector estimation circuit 101. The motion vector estimation circuit 101 includes a controller not shown in the diagram, which performs the following processing.

Step 701: The macroblock transmitted from the input unit 2001 is stored into the macroblock buffer 606.

Step 702: The controller calculates the search areas for the macroblock based on the macroblock number, and reads the image data of the search areas from the reference picture memory 2005 into the forward reference image buffer 601 and the backward reference image buffer 602 respectively. In the case where the macroblock held in the macroblock butter 606 is a macroblock in a P-picture, the image data is not read into the backward reference image buffer 602 and no processing of backward reference is performed on this macroblock.

Step 703: After completing reading of the search areas, the controller starts up the forward ME 603 and the backward ME 604. The forward ME 603 performs motion prediction using the current macroblock held in the macroblock buffer 606 and the search areas held in the forward reference image buffer 601, and finally obtains the forward motion vector of sub-pixel precision that makes the evaluation cost smallest and its cost value. In the same manner, the backward ME 604 performs motion prediction using the current macroblock held in the macroblock buffer 606 and the search areas held in the backward reference image buffer 602, and finally obtains the backward motion vector of sub-pixel precision that makes the evaluation cost smallest and its cost value.

Step 704: The forward ME 603 and the backward ME 604 respectively transmit the motion vectors of integer-pixel precision to the 2-tap image interpolator 605. The 2-tap image interpolator 605 reads the integer pixels from the respective reference image buffers based on the motion vectors of integer-pixel precision, generates sub-pixels of 1/2 pixel precision, and writes them into the respective reference image buffers. As mentioned above, it performs 1/2 pixel interpolation only around the prediction blocks of integer-pixel precision.

Step 705: After completing writing sub-pixels of 1/2 pixel precision, the controller starts up the forward ME 603 and the backward ME 604 again. The forward ME 603 performs motion prediction using the current macroblock held in the macroblock buffer 606 and the search areas of 1/2 pixel precision held in the forward reference image buffer 601, and obtains the forward motion vector of 1/2 pixel precision that makes the evaluation cost smallest and its cost value. In the same manner, the backward ME 604 performs motion prediction using the current macroblock held in the macroblock buffer 606 and the search areas of 1/2 pixel precision held in the backward reference image buffer 602, and obtains the backward motion vector of 1/2 pixel precision that makes the evaluation cost smallest and its cost value.

Step 706: The forward ME 603 and the backward ME 604 respectively transmit the motion vectors of 1/2 pixel precision to the 2-tap image interpolator 605. The 2-tap image interpolator 605 reads, based on the motion vectors of 1/2 pixel precision, the pixels of integer-pixel precision and 1/2 pixel precision respectively from the reference image buffers, generates sub-pixels of 1/4 pixel precision using a 2-tap filter, and writes them into the respective reference image buffers. As described above, it performs 1/4 pixel interpolation only around the prediction blocks of 1/2 pixel precision.

Step 707: After completing writing the sub-pixels of 1/4 pixel precision, the controller starts up the forward ME 603 and the backward ME 604. The forward ME 603 performs motion prediction using the current macroblock held in the macroblock buffer 606 and the search areas of 1/4 pixel precision held in the forward reference image buffer 601, and obtains the forward motion vector of 1/4 pixel precision that makes the evaluation cost smallest and its cost value. It outputs the cost value of the obtained forward motion vector of 1/4 pixel precision (first motion vector) to the motion vector direction determination unit 607, and stores that forward motion vector of 1/4 pixel precision (first motion vector) into the forward motion vector buffer 608. At the same time, it also stores the motion vector of 1/4 pixel precision that makes the evaluation cost second smallest (second motion vector) into the forward motion vector buffer 608. It may store the first to Nth motion vectors (N is 3 or a larger integer value), if necessary.

In the same manner, the backward ME 604 performs motion prediction using the current macroblock held in the macroblock buffer 606 and the search areas of 1/4 pixel precision held in the backward reference image buffer 602, and obtains the backward motion vector of 1/4 pixel precision that makes the evaluation cost smallest and its cost value. It outputs the cost value of the obtained backward motion vector of 1/4 pixel precision (first motion vector) to the motion vector direction determination unit 607, and stores the backward motion vector of 1/4 pixel precision (first motion vector) into the backward motion vector buffer 609. It also stores the motion vector of 1/4 pixel precision that makes the evaluation cost second smallest (second motion vector) into the backward motion vector buffer 609. Or, it may store the first to Nth motion vectors (N is 3 or a larger integer value), if necessary.

Step 708: The motion vector direction determination unit 607 determines the direction of the motion vectors, namely, forward, backward or bidirectional, based on the cost values transmitted from the forward ME 603 and the backward ME 604. The direction is determined in the following manner. For example, a threshold is set for a difference between forward and backward cost values. The direction is determined to be forward when the forward cost value is significantly smaller than the backward cost value (i.e., the difference obtained by subtracting the forward cost value from the backward cost value exceeds the threshold), it is determined to be backward when the backward cost value is significantly smaller than the forward cost value (i.e., the difference obtained by subtracting the backward cost value from the forward cost value exceeds the threshold), and it is determined to be bidirectional when the forward cost value and the backward cost value are close to each other (i.e., the difference between the forward and backward cost values is smaller than the threshold). This method is just an example, and the directions of motion vectors can be determined by other methods. Note that since the backward cost value is not inputted if a current macroblock is a macroblock in a P-picture, the direction of the motion vector is always determined to be forward.

Step 709: When determining the direction of the motion vector, the motion vector direction determination unit 607 gets out the motion vectors of the determined direction(s) from the motion vector buffer(s), and transmits them to the motion compensation circuit 102.

(1) When determining to be bidirectional, the motion vector direction determination unit 607 obtains the first forward motion vector from the forward motion vector buffer 608 and the first backward motion vector from the backward motion vector buffer 609, and transmits them to the motion compensation circuit 102.

(2) When determining to be forward, the motion vector direction determination unit 607 obtains, from the forward motion vector buffer 608, the first forward motion vector as well as the second motion vector that makes the evaluation cost second smallest, and transmits them to the motion compensation circuit 102. It may obtain the first to Nth motion vectors and transmit them, if necessary.

(3) When determining to be backward, the motion vector direction determination unit 607 obtains, from the backward motion vector buffer 609, the first backward motion vector as well as the second motion vector that makes the evaluation cost second smallest, and transmits them to the motion compensation circuit 102, in the same manner. It may obtain the first to Nth motion vectors and transmit them, if necessary.

As described above, the motion vector estimation circuit 101 performs motion prediction of sub-pixel precision using reference images generated by a 2-tap filter so as to narrow down the candidates for motion vectors for a current macroblock. On the other hand, the motion vector estimation circuit 101 does not perform motion prediction of sub-pixel precision using reference images generated by a 6-tap filter. Therefore, it is possible to perform motion prediction while keeping an amount of computation for generating sub-pixels and an amount of data transmission from an external memory below the conventional one. Two or more motion vectors which are narrowed down as a result of the motion prediction processing by the motion vector estimation circuit 101 are outputted to the motion compensation circuit 102.

Next, a detailed description is given for the structure and the operation of the motion compensation circuit 102.

FIG. 11 is a block diagram showing a structure of the motion compensation circuit 102. The motion compensation circuit 102 is a circuit that generates a prediction block by a 6-tap filter and performs motion compensation of high precision, and includes a 6-tap image interpolator 901, a 6-tap prediction block buffer 902, a motion vector buffer 903 and an average image generation unit 904. The 6-tap image interpolator 901 performs interpolation of a reference image using a 6-tap filter so as to generate a motion-compensated prediction block. The 6-tap prediction block buffer 902 holds prediction blocks generated by the 6-tap image interpolator 901. The motion vector buffer 903 holds a plurality of motion vectors inputted from the motion vector estimation circuit 101. In the case of bidirectional motion vectors, the average image generation unit 904 generates an average image of a prediction block corresponding to the forward motion vector and a prediction block corresponding to the backward motion vector which are held in the 6-tap prediction block buffer 902, and outputs it, as a bidirectional prediction block, to the subtraction circuit 2003 and the motion vector determination unit 103.

FIG. 12 is a flowchart showing a flow of motion compensation processing performed in the motion compensation circuit 102 shown in FIG. 11. A detailed description is given for the internal operations of the motion compensation circuit 102 with reference to the flowchart in FIG. 12. The motion compensation circuit 102 includes a controller not shown in the diagram, which controls the operation timing of each module.

Step 1001: When receiving a plurality of motion vectors and their directions transmitted from the motion vector estimation circuit 101, the motion vector buffer 903 holds them in an internal memory not shown in the diagram and outputs them to the 6-tap image interpolator 901.

Step 1002: The 6-tap image interpolator 901 reads, from the reference picture memory 2001, the integer pixels used for creating a prediction block corresponding to each motion vector. When the directions of the received motion vectors are different from each other, the 6-tap image interpolator 901 recognizes that the current macroblock is bidirectionally predictive and notifies the controller accordingly.

Step 1003: The 6-tap image interpolator 901 generates a prediction block corresponding to each motion vector using a 6-tap filter, and stores the generated prediction blocks into the 6-tap prediction block buffer 902.

Step 1004: When the motion vectors are not bidirectionally predictive, the controller turns the operation of the average image generation unit 904 off, and sequentially outputs the plurality of prediction blocks stored in the 6-tap prediction block buffer 902 to the subtraction circuit 2003 and the motion vector determination unit 103. At that time, it notifies the motion vector determination unit 103 of the total number (two or more) of prediction blocks to be transmitted.

Step 1005: At the same time, the controller transmits the plurality of motion vectors stored in the motion vector buffer 903 to the motion vector determination unit 103.

Step 1006: When the motion vectors are bidirectionally predictive, the controller turns the operation of the average image generation unit 904 on, and inputs, into the average image generation unit 904, the prediction block corresponding to the forward motion vector as well as the prediction block corresponding to the backward motion vector which are stored in the 6-tap prediction block buffer 902. The average image generation unit 904 generates the average image of these two prediction blocks, and outputs it, as a bidirectionally predictive block, to the subtraction circuit 2003 and the motion vector determination unit 103. At that time, it notifies the motion vector determination unit 103 of the total number (always one) of the prediction blocks to be transmitted.

Step 1007: At the same time, the controller transmits the forward and backward motion vectors stored in the motion vector buffer 903 to the motion vector determination unit 103.

As described above, the motion compensation circuit 102 performs motion compensation of sub-pixel precision using a 6-tap filter and generates prediction blocks for a current macroblock to be coded. This motion compensation is defined in the specifications of the MPEG4-AVC decoder, and indispensable processing for the coding apparatus to perform. As a result of the motion compensation processing performed in the motion compensation circuit 102, one bidirectional prediction block is generated for the bidirectional motion vector, while two or more prediction blocks are generated for the unidirectional motion vector. FIG. 13 is a diagram showing that unidirectional prediction and bidirectional prediction are switched based on judgment from coding costs of motion vectors estimated using a 2-tap filter, and in the case of unidirectional prediction, motion prediction can be performed with respect to two motion vectors using a 6-tap filter. Such branch processing performed based on whether a current macroblock is bidirectionally predictive or not has an advantage that it becomes possible, based on adaptive judgment as shown in FIG. 13, to make best use of a 6-tap motion compensation circuit having high computation performance. Since 2-tap motion prediction involves a certain degree of deterioration of image quality compared with 6-tap motion prediction that is one of the tools defined in the MPEG4-AVC standard, it is desirable to perform 6-tap motion prediction as much as possible for higher image quality. As shown in FIG. 13, a coding apparatus that includes a filter circuit capable of performing 6-tap motion prediction on n candidates for bidirectional prediction, for example, is capable of performing up to 2 x n candidates for unidirectional prediction. "Up to 2 x n" means that it is possible to combine unidirectional and bidirectional prediction so as to perform bidirectional prediction on a part of n candidates and unidirectional prediction on the remaining number of candidates. As for P-pictures, unidirectional prediction is always performed under the MPEG4-AVC standard, while as for B-pictures, it is possible to judge adaptively whether to perform unidirectional prediction or bidirectional prediction based on the costs obtained by a 2-tap filter. For example, in the case where the forward and backward costs of candidates for bidirectional prediction are significantly different from each other, it is good enough to use only the candidate with the smaller cost value for unidirectional prediction. Such adaptive circuit operation processing allows to obtain the image as high quality as possible using a 6-tap filter circuit of a size as small as possible.

Next, a detailed description is given for the structure and operation of the motion vector determination unit 103 using the diagrams.

FIG. 14 is a block diagram showing the internal structure of the motion vector determination unit 103.

The motion vector determination unit 103 includes a prediction image buffer 1101, a motion vector buffer 1102 and a coding cost calculation/comparison unit 1103. The prediction image buffer 1101 holds two or more prediction blocks as candidates. The motion vector buffer 1102 holds two or more motion vectors as candidates. The coding cost calculation/comparison unit 1103 calculates the coding costs of the candidates for a current macroblock and compares them with each other. As a result of comparison, it determines the motion vector that makes the coding cost for the macroblock smallest, and outputs the difference image data corresponding to that motion vector to the orthogonal transformation circuit 2007.

FIG. 15 is a flowchart showing a flow of processing performed by the motion vector determination unit 103. A detailed description is given for the internal operation of the motion vector determination unit 103 with reference to the flowchart in FIG. 15. The motion vector determination unit 103 includes a controller not shown in the diagram, which controls the operation timing of each module.

Step 1201: The controller is previously notified of the total number N of the prediction blocks to be transmitted from the motion compensation circuit 102. It initializes the number n of the prediction images which have been received and held inside to be zero (0). It also initializes the value of the smallest cost memory (not shown in the diagram) in the coding cost calculation/comparison unit to be the largest memory value. The following description is given on the assumption that the largest number of motion vectors are two. Since bidirectional prediction is performed using two motion vectors, N is 1 in the case of bidirectional prediction, while N is a value other than 1 ("2" in this case) in the case of unidirectional prediction.

Step 1202: The prediction block transmitted from the motion compensation circuit 102 is held in a temporary storage area of the prediction image buffer 1101. Then, the controller increments the number n of the received prediction images by one.

Step 1203: When N is 1, bidirectional prediction is to be performed, so two motion vectors (forward and backward) are transmitted from the motion compensation circuit 102 and held in the main storage area of the motion vector buffer 1102.

Step 1204: The controller turns the operation of the coding cost calculation/comparison unit 1103 off, and outputs the difference block inputted from the subtraction circuit 2003 as it is to the orthogonal transformation circuit 2007.

Step 1205: The controller further outputs the prediction block held in the temporary storage area of the prediction image buffer 1101 to the addition circuit 2006, and

Step 1206: outputs the bidirectional motion vectors held in the main storage area of the motion vector buffer 1102 to the coding unit 2012.

Step 1207: When N is not 1, unidirectional prediction is to be performed, so the motion vectors transmitted from the motion compensation circuit 102 are stored in the temporary storage area of the motion vector buffer 1102.

Step 1208: Upon receipt of the motion vectors, the controller turns the operation of the coding cost calculation/comparison unit 1103 on, and calculates the costs of each difference blocks inputted from the subtraction circuit 2003.

Step 1209: It compares the calculated cost values with the value of the smallest cost memory (not shown in the diagram) in the coding cost calculation/comparison unit 1103, and receives the next prediction block when the cost value of the difference block is larger.

(To Step 1202)

Step 1210: When the cost value of the difference block is smaller than the smallest cost memory value, it overwrites the smallest cost memory value with the cost value of the difference block.

Step 1211: Then, the controller moves the prediction blocks held in the temporary storage area of the prediction image buffer 1101 to the main storage area of the prediction image buffer 1101. At the same time, it moves the motion vectors held in the temporary storage area of the motion vector buffer 1102 to the main storage area of the motion vector buffer 1102.

Step 1212: When n is smaller than N, it receives the next prediction block. (To Step 1202)

Step 1213: When n is equal to N, the coding cost calculation/comparison unit 1103 outputs the difference block inputted from the subtraction circuit 2003 to the orthogonal transformation circuit 2007.

Step 1214: The controller further outputs the prediction blocks held in the main storage area of the prediction image buffer 1101 to the addition circuit 2006.

Step 1215: It outputs the unidirectional motion vectors held in the main storage area of the motion vector buffer 1102 to the coding unit 2012.

As described above, in the case of unidirectional prediction, the motion vector determination unit 103 calculates the coding costs of two or more difference blocks and compares them with each other so as to determine sequentially the motion vector that makes the coding cost smallest. Even if there are two or more candidates, they can be compared sequentially so that the best one is selected at each comparison, so there is no need to add a working memory or the like for selecting one from among the candidates. In other words, in order to select the best one, there is no need to store all the candidates in such a memory and sort them in the order of coding cost. All that needs to be done is to perform comparisons of the number of candidates, which requires only a small amount of computation. Therefore, there is no harm in replacing the conventional method using a 6-tap filter with the method of the present invention using a 2-tap filter as a method for a small amount of processing and high image quality, and the method of the present invention achieves high compression performance comparable to the conventional motion prediction of sub-pixel precision using a reference image created by a 6-tap filter. Note that although the above description has been made on the assumption that only one motion vector that makes the coding cost smallest is determined when it is judged to be unidirectional prediction, two motion vectors that make the coding cost smallest and second smallest may be determined when it is judged to be forward unidirectional prediction.

Next, a description is given below for a mechanism in which the motion prediction processing performed by the moving picture coding apparatus of the present invention achieves high compression performance comparable to the conventional motion prediction of sub-pixel precision using a reference image created by a 6-tap filter, without adding a newly-required memory while keeping an amount of computation below the conventional level. More specifically, in order to achieve high compression performance, it is desirable that the motion vector obtained by motion prediction of sub-pixel precision using a reference image created by a 6-tap filter is identical to the motion vector obtained by motion prediction of sub-pixel precision performed by the motion vector estimation circuit 101, the motion compensation circuit 102 and the motion vector determination unit 103 in the moving picture coding apparatus of the present invention.

FIG. 16 is a flowchart showing a process in which a motion vector is obtained through the processing performed by the motion vector estimation circuit 101, the motion compensation circuit 102 and the motion vector determination unit 103 in the moving picture coding apparatus of the present invention. A detailed description is given with reference to FIG. 16.

Step 301: The motion vector estimation circuit 101 reads a search area for a current macroblock to be coded from the reference picture memory 2005, and performs motion prediction of integer-pixel precision. As a result, it obtains a motion vector of integer-pixel precision.

Step 302: The motion vector estimation circuit 101 generates, around a prediction block pointed by the obtained motion vector of integer-pixel precision, a reference image for motion prediction of sub-pixel precision using a 2-tap filter.

Step 303: The motion vector estimation circuit 101 performs motion prediction of sub-pixel precision using the reference image so as to obtain candidates for motion vectors. As described in the above Step 705 and Step 706, it may obtain the position of the block that makes the coding cost smallest at 1/2 pixel precision, and further obtains, around the obtained position of the block, the positions of the n blocks that make the coding cost smallest with 1/4 pixel precision. Alternatively, it may obtain the positions of the n blocks that make the coding cost smallest from among all the positions of 1/4 pixel precision around the position of the block that makes the coding cost smallest at integer-pixel precision. In either case, the number of motion vectors is narrowed down to n using a 2-tap filter of less precision, and then the final motion vector is determined using a 6-tap filter of relatively high precision. The reference image used for this motion prediction is different from a reference image generated by a 6-tap filter, to be exact, and therefore, the motion vector that makes the coding cost smallest among the obtained motion vector candidates is not always identical to the motion vector obtained in sub-pixel precision motion prediction processing using a reference image generated by a 6-tap filter. On the other hand, reference images generated by a 2-tap filter and a 6-tap filter are very similar to each other, so there is an extremely high possibility that the obtained motion vector candidates include the motion vector which is identical to the motion vector obtained in the sub-pixel precision motion prediction processing using a reference image generated by a 6-tap filter.

Step 304: The motion compensation circuit 102 performs motion compensation on two or more motion vector candidates so as to generate prediction blocks with respect to these candidates. In this case, the motion compensation circuit 102 obtains, from the reference picture memory 2005, the pixels which are necessary for interpolating the blocks indicated by the motion vectors, and generates the prediction blocks using a 6-tap filter.

Step 305: The motion vector determination unit 103 calculates the coding costs of these prediction blocks and compares them with each other, and obtains the motion vector with the smallest coding cost. The obtained motion vector is identical to the motion vector obtained in the sub-pixel precision motion prediction processing using a reference image generated by a 6-tap filter. Here, the processing for calculating and comparing the coding costs of the prediction blocks is exactly the same one for estimating motion vectors of sub-pixel precision using a reference image generated by a 6-tap filter.

As described above, according to the motion prediction performed by the moving picture coding apparatus of the present invention, a high-resolution reference image is generated using a filter other than a 6-tap filter, and motion vectors of sub-pixel precision are estimated. Therefore, it becomes possible to narrow down to two or more motion vector candidates, without adding a newly-required memory while restraining an increase in an amount of computation for reference image generation. On the other hand, these motion vector candidates often include the motion vector obtained by sub-pixel precision motion prediction using a reference image generated by a 6-tap filter. Therefore, by performing motion compensation on these motion vector candidates using a 6-tap filter so as to generate prediction blocks and comparing their coding costs, it becomes possible to select, from among these prediction blocks, the motion vector that mataches with the motion vector obtained by sub-pixel precision motion prediction using a reference image generated by a 6-tap filter. In other words, the same motion vector to be used for coding a current picture is selected in either the motion prediction processing performed by the moving picture coding apparatus of the present invention or the conventional sub-pixel precision motion prediction processing using a reference image generated by a 6-tap filter. Accordingly, the present invention achieves compression performance as high as the conventional method.

As described above, according to the moving picture coding apparatus of the present invention, the motion vector estimation circuit 101 performs motion estimation of sub-pixel precision using a reference image generated by a 2-tap filter so as to narrow down the number of motion vector candidates, so it becomes possible to obtain motion vector candidates while maintaining an amount of computation below the conventional level. When the motion compensation circuit 102 performs motion compensation, motion-compensated prediction blocks are generated using a 6-tap filter with respect to these motion vector candidates. Furthermore, the motion vector determination unit 103 calculates the coding costs of the difference blocks corresponding to the respective motion vectors and compares them with each other, so it becomes possible to keep the compression performance as high as the conventional sub-pixel precision motion prediction using a reference image generated by a 6-tap filter, without adding a newly-required memory while keeping an amount of computation below the conventional level.

Note that each functional block in the block diagrams (such as FIGS. 7, 9, 11 and 14) is typically embodied as an LSI that is an integrated circuit. These blocks may be implemented in separate chips, or all or a part of them may be implemented in a single chip.

For example, the functional blocks other than the memory can be implemented in a single chip.

Note that a description is given on the assumption that an integrated circuit is an LSI, but sometimes it is called an IC, a system LSI, a super LSI or an ultra LSI according to its degree of integration.

In order to embody each functional block in integrated-circuit form, it can be embodied not only as an LSI but also as a special-purpose circuit or a general-purpose processor. Alternatively, it is also possible to use, after manufacturing of an LSI, a user-programmable field programmable gate array (FPGA) or a reconfigurable processor in which connection or setting of circuit cells in the LSI can be reconfigured.

Furthermore, if a circuit integration technique alternative to such LSI appears with the benefit of development of semiconductor technology or another technology derived from the semiconductor technology, such a new technique can be used for integration of functional blocks. Biotechnology may possibly be applied to such integration.

Or, it is also possible to implement a storage unit for storing data to be coded or decoded as a separate element, not to integrate it into a single chip.

Moreover, it does not matter whether a buffer or a memory is implemented in the LSI of the present invention.

(Second Embodiment)

If a program for realizing the configuration of the moving picture coding method and the moving picture decoding method as shown in the above first embodiment is recorded on a recording medium such as a flexible disk, it becomes possible to perform the processing as shown in the above first embodiment easily in an independent computer system.

FIGS. 17A, 17B and 17C are illustrations showing the case where the moving picture coding method and the moving picture decoding method in the above first embodiment are performed in a computer system using a program recorded on a recording medium such as a flexible disk.

FIG. 17B shows a front view of an appearance of a flexible disk, a cross-sectional view thereof and the flexible disk itself, and FIG. 17A shows an example of a physical format of the flexible disk as a recording medium body. The flexible disk FD is contained in a case F, and a plurality of tracks Tr are formed concentrically on the surface of the disk in the radius direction from the periphery to the inside, and each track is divided into 16 sectors Se in the angular direction. Therefore, as for the flexible disk storing the above-mentioned program, the moving picture coding method and the moving picture decoding method as the above program are recorded in an area allocated for it on the flexible disk FD.

Fig. 17C shows a structure for recording and reproducing the program on and from the flexible disk FD. When the program is recorded on the flexible disk FD, the moving picture coding method and the moving picture decoding method as the program is written in the flexible disk from the computer system Cs via a flexible disk drive. When the moving picture coding method and the moving picture decoding method are constructed in the computer system by the program on the flexible disk, the program is read out from the flexible disk using the flexible disk drive and transferred to the computer system.

The above description is given on the assumption that the recording medium is a flexible disk, but the same processing can also be performed using an optical disk. In addition, the recording medium is not limited to a flexible disk and an optical disk, but the same processing can be performed using any other medium such as a CD-ROM, a memory card and a ROM cassette capable of recording a program.

**(Third Embodiment)**

Furthermore, a description is given for the applications of the moving picture coding method and the moving picture decoding method as shown in the above first embodiment and the systems using these methods.

FIG. 18 is a block diagram showing the overall configuration of a content supply system ex100 for realizing a content distribution service. The area for providing communication service is divided into cells of desired size, and base stations ex107 to ex110 that are fixed wireless stations are placed in respective cells.

In this content supply system ex100, devices such as a computer ex111, a personal digital assistant (PDA) ex112, a camera ex113, a mobile phone ex114 and a camera-equipped mobile phone ex115 are connected to the Internet ex 101 via an Internet service provider ex102, a telephone network ex104 and base stations ex107 to ex110.

However, the content supply system ex100 is not limited to the configuration as shown in Fig. 18, and any combination of them may be connected. Also, each device may be connected directly to the telephone network ex104, not through the base stations ex107 to ex110.

The camera ex113 is a device such as a digital video camera capable of shooting moving pictures. The mobile phone may be a mobile phone of Personal Digital Communications (PDC) system, Code Division Multiple Access (CDMA) system, Wideband-Code Division Multiple Access (W-CDMA) system or Global System for Mobile Communications (GSM) system, a Personal Handyphone system (PHS), or the like, and any of them can be used.

A streaming server ex103 is connected to the camera ex113 via the base station ex109 and the telephone network ex104, which allows live distribution or the like based on the coded data transmitted from a user, using the camera ex113. Either the camera ex113 or the server or the like for transmitting the data may code the shot data. Also, the moving picture data shot by a camera ex116 may be transmitted to the streaming server ex103 via the computer ex111. The camera ex116 is a device such as a digital camera capable of shooting still and moving pictures. In this case, either the camera ex116 or the computer ex111 may code the moving picture data. An LSI ex117 included in the computer ex111 or the camera ex116 actually performs coding processing. Software for coding and decoding moving pictures may be integrated into any type of storage medium (such as a CD-ROM, a flexible disk and a hard disk) that is a recording medium which is readable by the computer ex111 or the like. Furthermore, the camera-equipped mobile phone ex115 may transmit the moving picture data. This moving picture data is the data coded by the LSI included in the mobile phone ex115.

The content supply system ex100 codes contents (such as a live music video) shot by users using the camera ex113, the camera ex116 or the like and transmits them to the streaming server ex103, in the same manner as the above first embodiment, while the streaming server ex103 makes stream distribution of the contents data to the clients at their request. The clients include the computer ex111, the PDA ex112, the camera ex113, the mobile phone ex114 and so on capable of decoding the above-mentioned coded data. In the content supply system ex100, the clients can thus receive and reproduce the coded data, and further the clients can receive, decode and reproduce the data in real time so as to realize personal broadcasting.

When each device in this system performs coding or decoding, the moving picture coding apparatus or the moving picture decoding apparatus, as shown in the above first embodiment, can be used.

A mobile phone will be explained as an example of the device.

FIG. 19 is a diagram showing the mobile phone ex115 that uses the moving picture coding method and the moving picture decoding method explained in the above first embodiment. The mobile phone ex115 has: an antenna ex201 for sending and receiving radio waves to and from the base station ex110; a camera unit ex203 such as a CCD camera capable of shooting video and still pictures; a display unit ex202 such as a liquid crystal display for displaying the data obtained by decoding video and the like shot by the camera unit ex203 and received via the antenna ex201; a body unit including a set of operation keys ex204; a voice output unit ex208 such as a speaker for outputting voices; a voice input unit 205 such as a microphone for inputting voices; a storage medium ex207 for storing coded or decoded data such as data of shot moving or still pictures, data of received e-mails, and data of received moving or still pictures; and a slot unit ex206 for attaching the storage medium ex207 to the mobile phone ex115. The storage medium ex207 includes a flash memory element, a kind of an electrically erasable and programmable read only memory (EEPROM) that is an electrically erasable and rewritable nonvolatile memory, in a plastic case such as an SD card.

The mobile phone ex115 will be further explained with reference to FIG. 20. In the mobile phone ex115, a main control unit ex311 for overall controlling the display unit ex202 and the body unit including operation keys ex204 is connected to a power supply circuit unit ex310, an operation input control unit ex304, a picture coding unit ex312, a camera interface unit ex303, a liquid crystal display (LCD) control unit ex302, a picture decoding unit ex309, a multiplex/demultiplex unit ex308, a record/reproduce unit ex307, a modem circuit unit ex306 and a voice processing unit ex305, and these units are connected to each other via a synchronous bus ex313.

When a call-end key or a power key is turned ON by a user's operation, the power supply circuit unit ex310 supplies power to respective units from a battery pack, so as to activate the camera-equipped digital mobile phone ex115 into a ready state.

In the mobile phone ex115, the voice processing unit ex305 converts the voice signals received by the voice input unit ex205 in voice conversation mode into digital voice data under the control of the main control unit ex311 including a CPU, ROM, RAM or the like, the modem circuit unit ex306 performs spread spectrum processing of the digital voice data, and the send/receive circuit unit ex301 performs digital-to-analog conversion and frequency transform of the data, so as to transmit it via the antenna ex201. Also, in the mobile phone ex115, after the data received by the antenna ex201 in voice conversation mode is amplified and performed of frequency transform and analog-to-digital conversion, the modem circuit unit ex306 performs inverse spread spectrum processing of the data, and the voice processing unit ex305 converts it into analog voice data, so as to output it via the voice output unit 208.

Furthermore, when transmitting e-mail in data communication mode, the text data of the e-mail inputted by operating the operation keys ex204 on the body unit is sent out to the main control unit ex311 via the operation input control unit ex304. After the modem circuit unit ex306 performs spread spectrum processing of the text data and the send/receive circuit unit ex301 performs digital-to-analog conversion and frequency transform for it, the main control unit ex311 transmits the resulting data to the base station ex110 via the antenna ex201.

When picture data is transmitted in data communication mode, the picture data shot by the camera unit ex203 is supplied to the picture coding unit ex312 via the camera interface unit ex303. When the picture data is not transmitted, it is also possible to display the picture data shot by the camera unit ex203 directly on the display unit 202 via the camera interface unit ex303 and the LCD control unit ex302.

The picture coding unit ex312, which includes the moving picture coding apparatus as explained in the present invention, compresses and codes the picture data supplied from the camera unit ex203 by the coding method used for the moving picture coding apparatus as shown in the above first embodiment so as to transform it into coded picture data, and sends it out to the multiplex/demultiplex unit ex308. At this time, the mobile phone ex115 sends out the voices received by the voice input unit ex205 during shooting by the camera unit ex203, as digital voice data, to the multiplex/demultiplex unit ex308 via the voice processing unit ex305.

The multiplex/demultiplex unit ex308 multiplexes the coded picture data supplied from the picture coding unit ex312 and the voice data supplied from the voice processing unit ex305 by a predetermined method, the modem circuit unit ex306 performs spread spectrum processing on the multiplexed data obtained as a result of the multiplexing, and the send/receive circuit unit ex301 performs digital-to-analog conversion and frequency transform on the resulting data and then transmits the obtained data via the antenna ex201.

In the case where data of a moving picture file which is linked to a Web page or the like in data communication mode is received, the modem circuit unit ex306 performs inverse spread spectrum processing on the data received from the base station ex110 via the antenna ex201, and sends out the multiplexed data obtained as a result of the processing to the multiplex/demultiplex unit ex308.

In order to decode the multiplexed data received via the antenna ex201, the multiplex/demultiplex unit ex308 separates the multiplexed data into a bit stream of picture data and a bit stream of voice data, and supplies the coded picture data to the picture decoding unit ex309 and the voice data to the voice processing unit ex305 respectively via the synchronous bus ex313.

Next, the picture decoding unit ex309, which includes the picture decoding apparatus as explained in the present invention, decodes the bit stream of picture data by the decoding method corresponding to the coding method as shown in the above first embodiment so as to generate reproduced moving picture data, and supplies this data to the display unit ex202 via the LCD control unit ex302, and thus moving picture data included in a moving picture file linked to a Web page, for instance, is displayed. At the same time, the voice processing unit ex305 converts the voice data into analog voice data, and supplies this data to the voice output unit ex208, and thus voice data included in a moving picture file linked to a Web page, for instance, is reproduced.

The present invention is not limited to the above-mentioned system, and at least either the moving picture coding apparatus or the moving picture decoding apparatus in the above first embodiment can be incorporated into a system for digital broadcasting as shown in Fig. 21. Such ground-based or satellite digital broadcasting has been in the news lately. More specifically, a bit stream of video information is transmitted from a broadcast station ex409 to a communication or broadcast satellite ex410 via radio waves. Upon receipt of it, the broadcast satellite ex410 transmits radio waves for broadcasting, a home-use antenna ex406 with a satellite broadcast reception setup receives the radio waves, and a device such as a television (receiver) ex401 or a set top box (STB) ex407 decodes the bit stream for reproduction. The moving picture decoding apparatus as shown in the above first embodiment can be implemented in the reproduction apparatus ex403 for reading off and decoding the bit stream recorded on a storage medium ex402 that is a recording medium such as a CD and DVD. In this case, the reproduced video signals are displayed on a monitor ex404. It is also conceived to implement the moving picture decoding apparatus in the set top box ex407 connected to a cable ex405 for a cable television or the antenna ex406 for satellite and/or ground-based broadcasting so as to reproduce them on a monitor ex408 of the television. The moving picture decoding apparatus may be incorporated into the television, not in the set top box. Or, a car ex412 having an antenna ex411 can receive signals from the satellite ex410, the base station ex107 or the like for reproducing moving pictures on a display device such as a car navigation system ex413 in the car ex412.

Furthermore, the moving picture coding apparatus as shown in the above first embodiment can code picture signals for recording them on a recording medium. As a specific example, there is a recorder ex420 such as a DVD recorder for recording picture signals on a DVD disc ex421 and a disk recorder for recording them on a hard disk. They can be recorded on an SD card ex422. If the recorder ex420 includes the moving picture decoding apparatus as shown in the above first embodiment, the picture signals recorded on the DVD disc ex421 or the SD card ex422 can be reproduced for display on the monitor ex408.

As the structure of the car navigation system ex413, the structure without the camera unit ex203, the camera interface unit ex303 and the picture coding unit ex312, out of the units shown in FIG. 20, can be conceived. The same applies to the computer ex111, the television (receiver) ex401 and the like.

In addition, the following three types of implementations can be conceived for a terminal such as the above-mentioned mobile phone ex114: a sending/receiving terminal including both an encoder and a decoder, a sending terminal including an encoder only, and a receiving terminal including a decoder only.

As described above, it is possible to use the moving picture coding method or the moving picture decoding method as shown in the above first embodiment in any of the above-mentioned apparatuses and systems, and using this method, the effects described in the above first embodiment can be obtained.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## INDUSTRIAL APPLICABILITY

The moving picture coding apparatus according to the present invention is valuable as an encoder LSI that compresses and codes uncompressed moving picture data. The present moving picture coding apparatus is also applicable as a video storage apparatus, a video transmission apparatus or the like if it is implemented into a variety of systems.

## Claims

**1.** A moving picture coding apparatus comprising:

a motion vector estimation unit operable to interpolate, with sub-pixel precision, a predetermined region within a search area in a reference picture, using a first filter, and to estimate two or more motion vectors indicating positions of prediction blocks having high correlation with a current block to be coded, within the interpolated region; and

a motion vector determination unit operable to interpolate, with sub-pixel precision, each of the prediction blocks indicated by the estimated motion vectors, using a second filter having a larger number of taps than the first filter, and to determine, based on difference data between each of the interpolated prediction blocks and the current block, a motion vector indicating a position of a prediction block having highest correlation with the current block, from among the motion vectors estimated by said motion vector estimation unit.

**2.** The moving picture coding apparatus according to Claim 1,
wherein said motion vector estimation unit includes:

an integer pixel precision motion vector estimation unit operable to estimate, with integer-pixel precision, a motion vector indicating a position of a prediction block having highest correlation with the current block, within the search area in the reference picture;

a sub-pixel precision interpolation unit operable to interpolate, with the sub-pixel precision, the prediction block indicated by the motion vector estimated with integer-pixel precision as well as a region around the prediction block within the search area, using the first filter; and

a sub-pixel precision motion vector estimation unit operable to estimate two or more motion vectors within the region which is interpolated with the sub-pixel precision, and

said motion vector determination unit is operable to determine the motion vector from among the motion vectors estimated by said sub-pixel precision motion vector estimation unit.

**3.** The moving picture coding apparatus according to Claim 1,
wherein said motion vector estimation unit includes:

an integer pixel precision motion vector estimation unit operable to estimate, with integer-pixel precision, a motion vector indicating a position of a prediction block having highest correlation with the current block, within the search area in the reference picture;
a first sub-pixel precision interpolation unit operable to interpolate, with first sub-pixel precision, the prediction block indicated by the motion vector estimated with the integer-pixel precision as well as a region around the prediction block within the search area, using the first filter; and
a first sub-pixel precision motion vector estimation unit operable to estimate a motion vector within the region which is interpolated with the first sub-pixel precision.

**4.** The moving picture coding apparatus according to Claim 3,
wherein said motion vector estimation unit further includes:

a second sub-pixel precision interpolation unit operable to interpolate, with second sub-pixel precision which is more precise than the first sub-pixel precision, the prediction block indicated by the motion vector estimated with the first sub-pixel precision as well as a region around the prediction block within the search area, using the first filter; and
a second sub-pixel precision motion vector estimation unit operable to estimate two or more motion vectors within the region which is interpolated with the second sub-pixel precision, and

said motion vector determination unit is operable to determine the motion vector from among the motion vectors estimated by said second sub-pixel precision motion vector estimation unit.

**5.** The moving picture coding apparatus according to Claim 4,
wherein said second sub-pixel precision motion vector estimation unit is operable to estimate a forward motion vector and a backward motion vector within the region which is interpolated with the second sub-pixel precision.

**6.** The moving picture coding apparatus according to Claim 5,
wherein said second sub-pixel precision motion vector estimation unit is operable to estimate at least a first motion vector and a second motion vector as candidates for each of the forward motion vector and the backward motion vector, the first motion vector indicating a position of a prediction block having highest correlation with the current block, and the second motion vector indicating a position of a prediction block having second highest correlation with the current block.

**7.** The moving picture coding apparatus according to Claim 5,
wherein said second sub-pixel precision motion vector estimation unit further includes:

a coding cost calculation unit operable to calculate difference data between a prediction block and a current block to be coded, and to calculate a coding cost based on the calculated difference data, the coding cost indicating that correlation between the prediction block and the current block becomes higher as a value of the coding cost becomes smaller; and
a direction determination unit operable to compare a coding cost of a forward prediction block indicated by the forward motion vector with a coding cost of a backward prediction block indicated by the backward motion vector, and to determine a prediction direction of the current block based on the comparison, the forward and backward motion vectors being estimated by said second sub-pixel precision motion vector estimation unit.

**8.** The moving picture coding apparatus according to Claim 7,
wherein the direction determination unit is operable to determine:

(i) that the prediction direction of the current block is bidirectional in the case where a difference between the coding cost of the forward prediction block and the coding cost of the backward prediction block is within a predetermined range of values,
(ii) that the prediction direction of the current block is unidirectional in the case where the coding cost of the forward prediction block is smaller than the coding cost of the backward prediction block and the difference between the coding costs is so large as to exceed the predetermined range, and

(iii) that the prediction direction of the current block is unidirectional in the case where the coding cost of the backward prediction block is smaller than the coding cost of the forward prediction block and the difference between the coding costs is so large as to exceed the predetermined range.

**9.** The moving picture coding apparatus according to Claim 8,
wherein said second sub-pixel precision motion vector estimation unit is operable to estimate two or more motion vectors as candidates for each of the forward motion vector and the backward motion vector,
said motion vector determination unit further includes
a second coding cost calculation unit operable to calculate a second coding cost based on difference data between the current block and each of the prediction blocks after each prediction block is interpolated with sub-pixel precision using the second filter, the second coding cost indicating that correlation between each prediction block and the current block becomes higher as a value of the second coding cost becomes smaller, and
in the case where said direction determination unit determines that the prediction direction of the current block is unidirectional, said motion vector determination unit is operable to determine, based on the second coding cost, a motion vector indicating a position of a prediction block having highest correlation with the current block, from among the estimated motion vector candidates either for the forward motion vector or the backward motion vector.

**10.** The moving picture coding apparatus according to Claim 9,
wherein said motion vector determination unit is operable to select a motion vector indicating a position of a prediction block with a smallest second coding cost, and to determine: (i) the motion vector from among the estimated forward motion vector candidates in the case where said direction determination unit determines that the prediction direction of the current block is forward, and (ii) the motion vector from among the estimated backward motion vector candidates in the case where said direction determination unit determines that the prediction direction of the current block is backward.

**11.** The moving picture coding apparatus according to Claim 9, further comprising
an average image generation unit operable to generate an average image of the forward prediction block and the backward prediction block in the case where said direction determination unit determines that the prediction direction of the current block is bidirectional,
wherein said second sub-pixel precision motion vector estimation unit is operable to estimate at least a first motion vector and a second motion vector as candidates for each of the forward motion vector and the backward motion vector, the first motion vector indicating a position of a prediction block having highest correlation with the current block, and the second motion vector indicating a position of a prediction block having second highest correlation with the current block,
in the case where said direction determination unit determines that the prediction direction of the current block is bidirectional, said motion vector determination unit determines that each of the first forward motion vector and the first backward motion vector is the motion vector, and
said average image generation unit is operable to generate an average image of a prediction block indicated by the first forward motion vector and a prediction block indicated by the first backward motion vector, each of the first forward motion vector and the first backward motion vector being determined to be the motion vector by said motion vector determination unit.

**12.** The moving picture coding apparatus according to Claim 1,
wherein the first filter interpolates a region in a reference picture by linear interpolation.

**13.** The moving picture coding apparatus according to Claim 1,
wherein the first filter is a 2-tap filter, and the second filter is 6-tap filter.

**14.** An integrated unit comprising:

a motion vector estimation unit operable to interpolate, with sub-pixel precision, a predetermined region within a search area in a reference picture, using a first filter, and to estimate two or more motion vectors indicating positions of prediction blocks having high correlation with a current block to be coded, within the interpolated region; and
a motion vector determination unit operable to interpolate, with sub-pixel precision, each of the prediction blocks indicated by the estimated motion vectors, using a second filter having a larger number of taps than the first filter, and to determine, based on difference data between each of the interpolated prediction blocks and the current block, a motion vector indicating a position of a prediction block having highest correlation with the current block, from among the motion vectors estimated by said motion vector estimation unit,

wherein said motion vector estimation unit and said motion vector determination unit are integrated into a single unit.

**15.** A moving picture coding method comprising:

(i) interpolating, with sub-pixel precision, a predetermined region within a search area in a reference picture, using a first filter, and (ii) estimating two or more motion vectors indicating positions of prediction blocks having high correlation with a current block to be coded, within the interpolated region; and
(i) interpolating, with sub-pixel precision, each of the prediction blocks indicated by the estimated motion vectors, using a second filter having a larger number of taps than the first filter, and (ii) determining, based on difference data between each of the interpolated prediction blocks and the current block, a motion vector indicating a position of a prediction block having highest correlation with the current block, from among the motion vectors estimated by said motion vector estimation unit.

**16.** A program causing a computer to execute:

(i) interpolating, with sub-pixel precision, a predetermined region within a search area in a reference picture, using a first filter, and (ii) estimating two or more motion vectors indicating positions of prediction blocks having high correlation with a current block to be coded, within the interpolated region; and
(i) interpolating, with sub-pixel precision, each of the prediction blocks indicated by the estimated motion vectors, using a second filter having a larger number of taps than the first filter, and (ii) determining, based on difference data between each of the interpolated prediction blocks and the current block, a motion vector indicating a position of a prediction block having highest correlation with the current block, from among the motion vectors estimated by said motion vector estimation unit.

FIG. 1

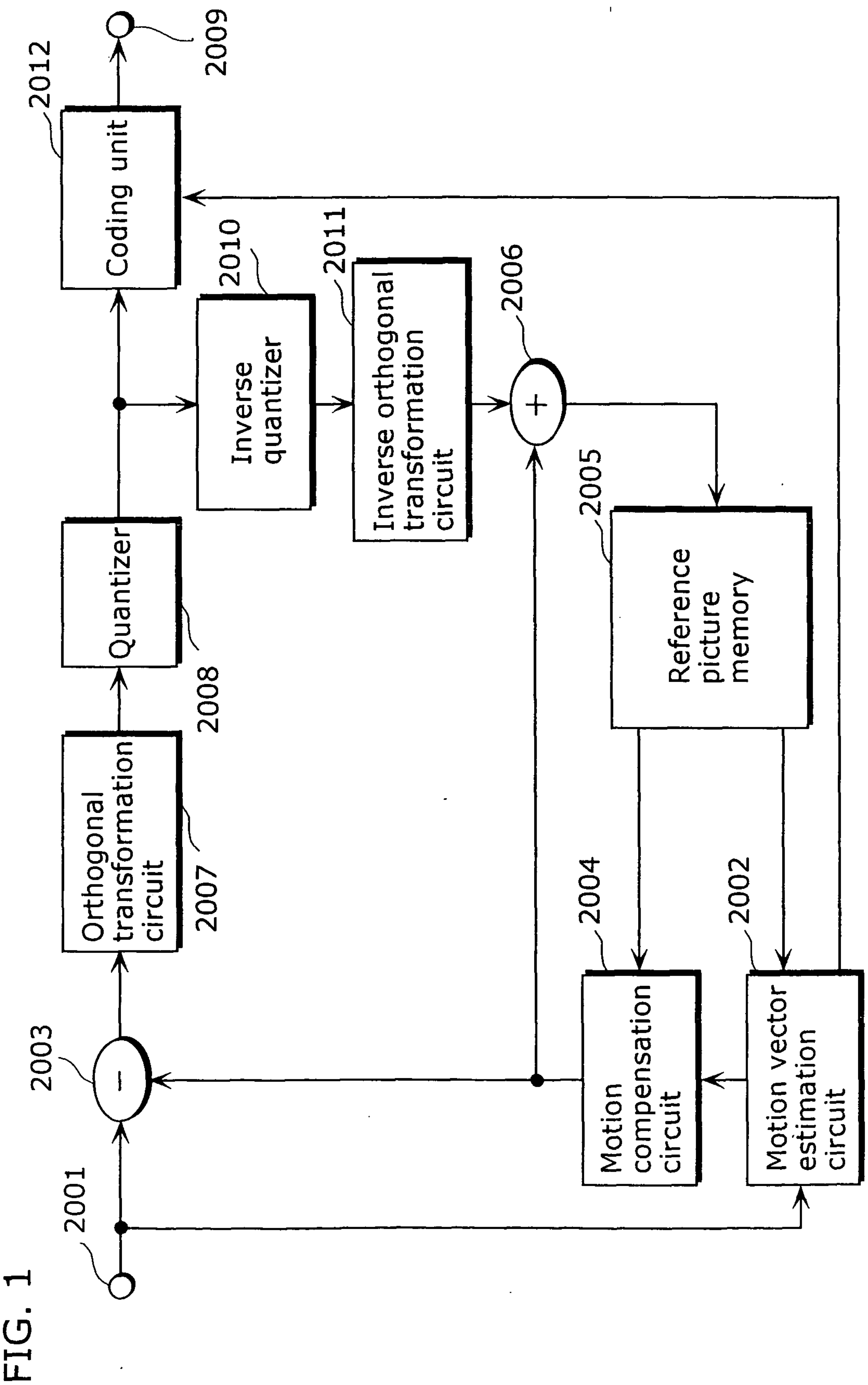
2001
2003
Orthogonal transformation circuit
2007
Quantizer
2008
Coding unit
2012
2009
Inverse quantizer
2010
Inverse orthogonal transformation circuit
2011
2006
Reference picture memory
2005
Motion compensation circuit
2004
Motion vector estimation circuit
2002

FIG. 2

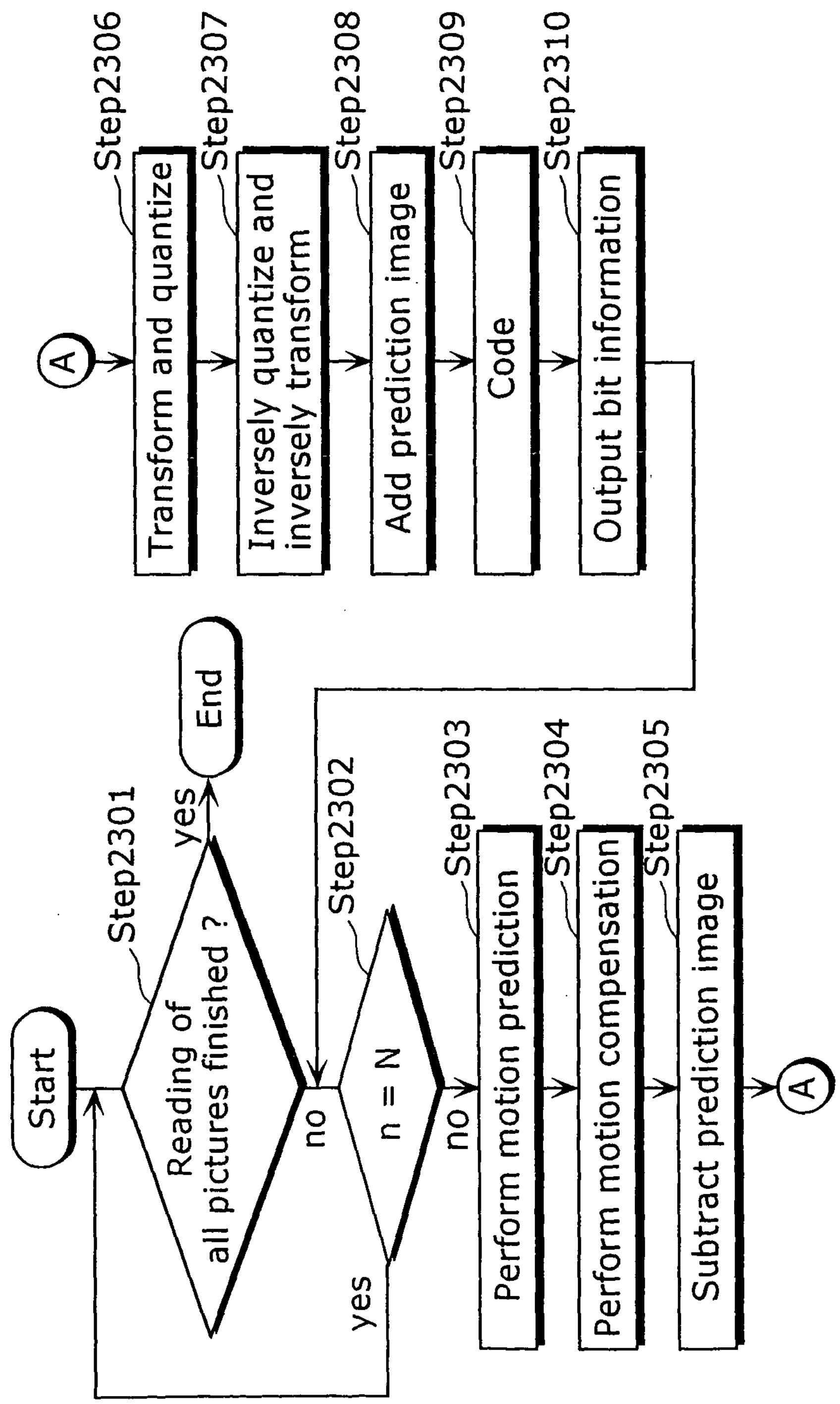
Start
Reading of all pictures finished ?
Step2301
yes
End
no
n = N
Step2302
yes
no
Perform motion prediction
Step2303
Perform motion compensation
Step2304
Subtract prediction image
Step2305
A
A
Transform and quantize
Step2306
Inversely quantize and inversely transform
Step2307
Add prediction image
Step2308
Code
Step2309
Output bit information
Step2310

FIG. 3

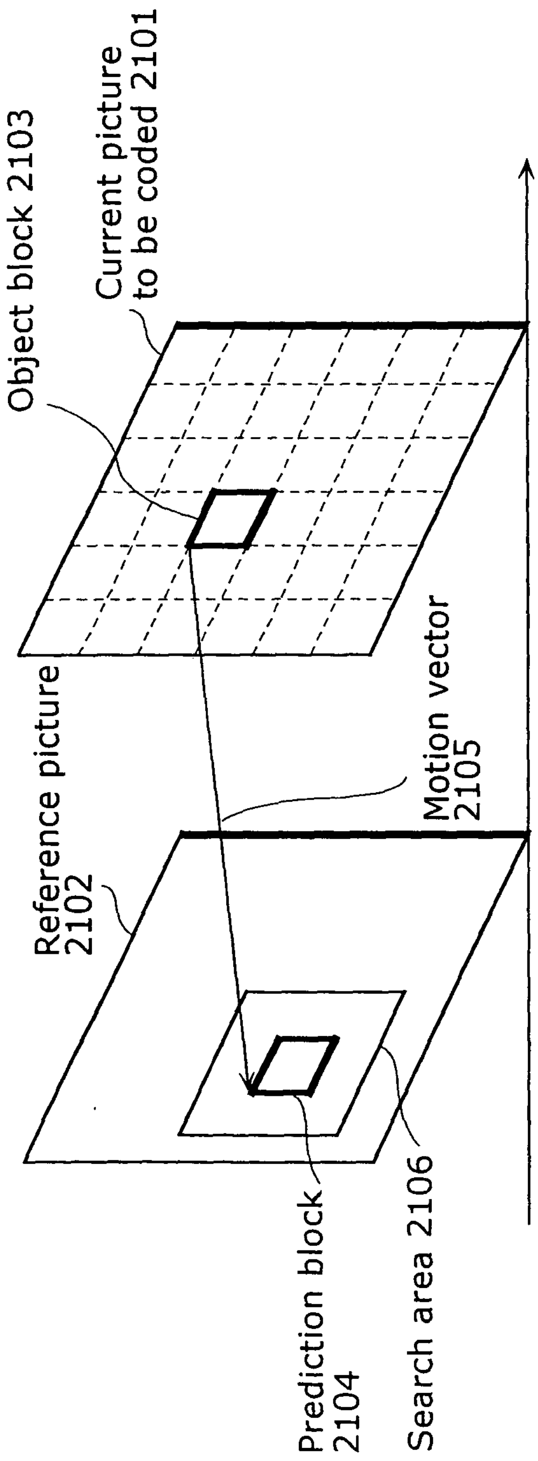
Current picture
to be coded 2101
Object block 2103
Reference picture
2102
Motion vector
2105
Prediction block
2104
Search area 2106

FIG. 4

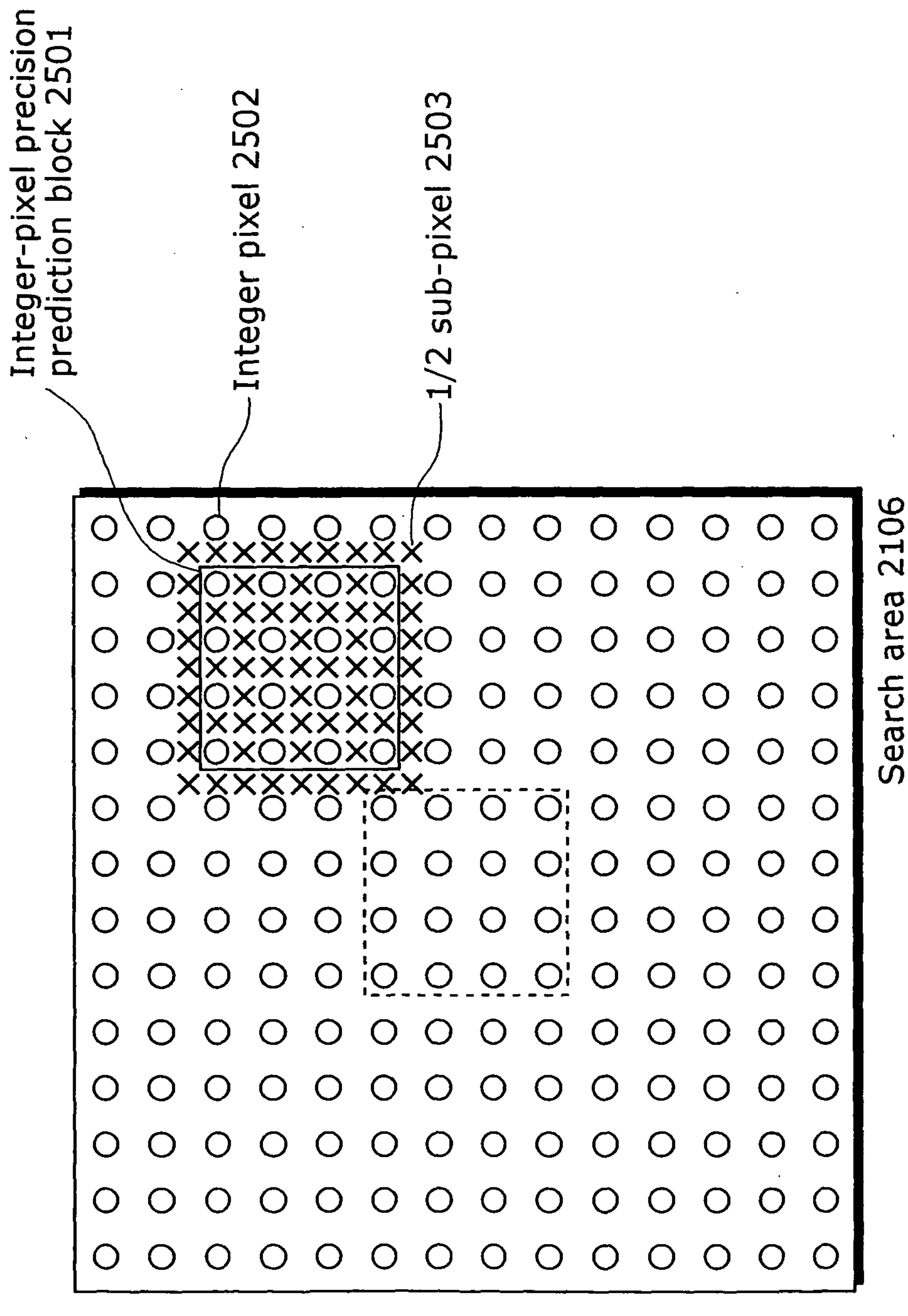
Integer-pixel precision prediction block 2501
Integer pixel 2502
1/2 sub-pixel 2503
Search area 2106

FIG. 5

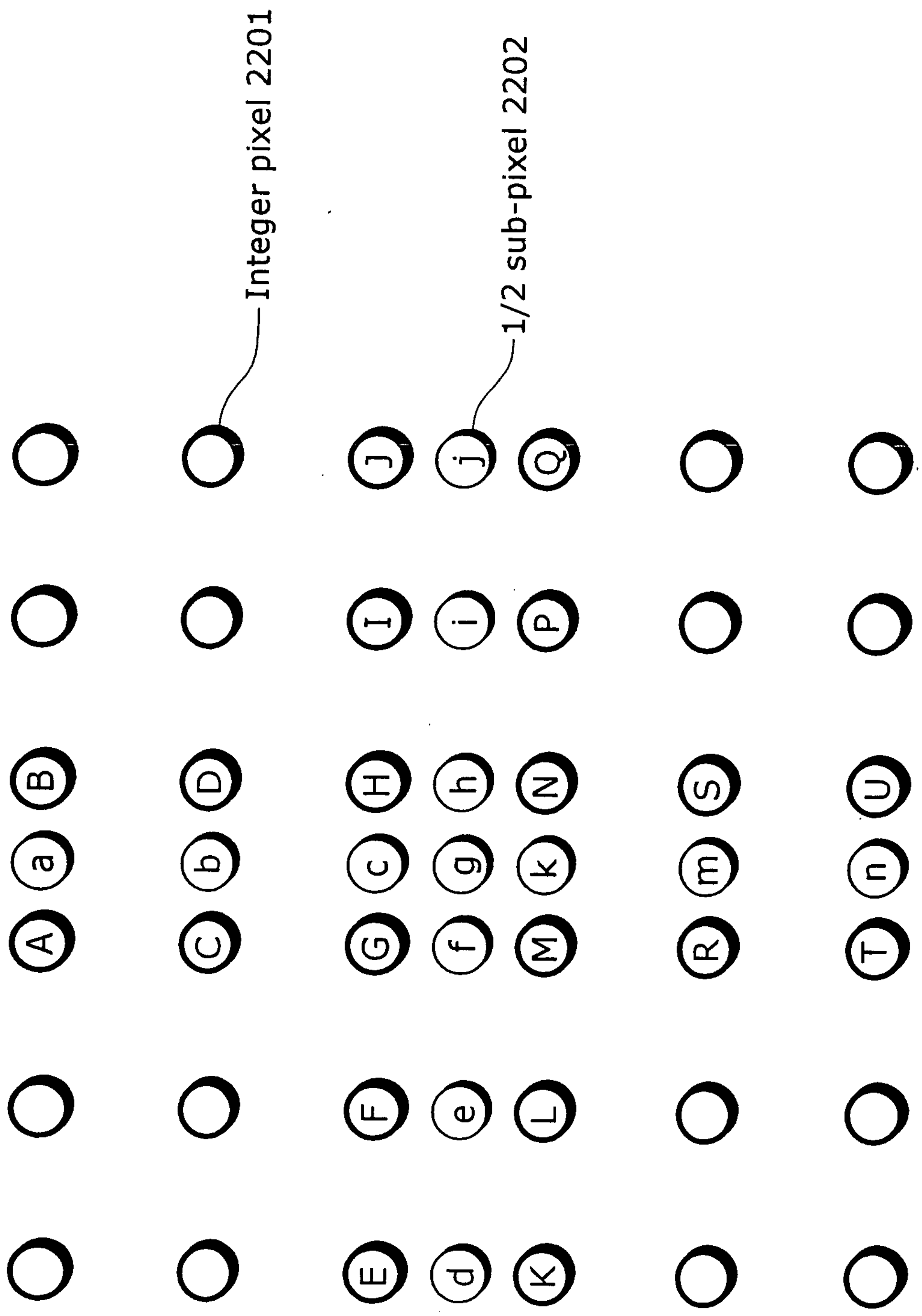

FIG. 6

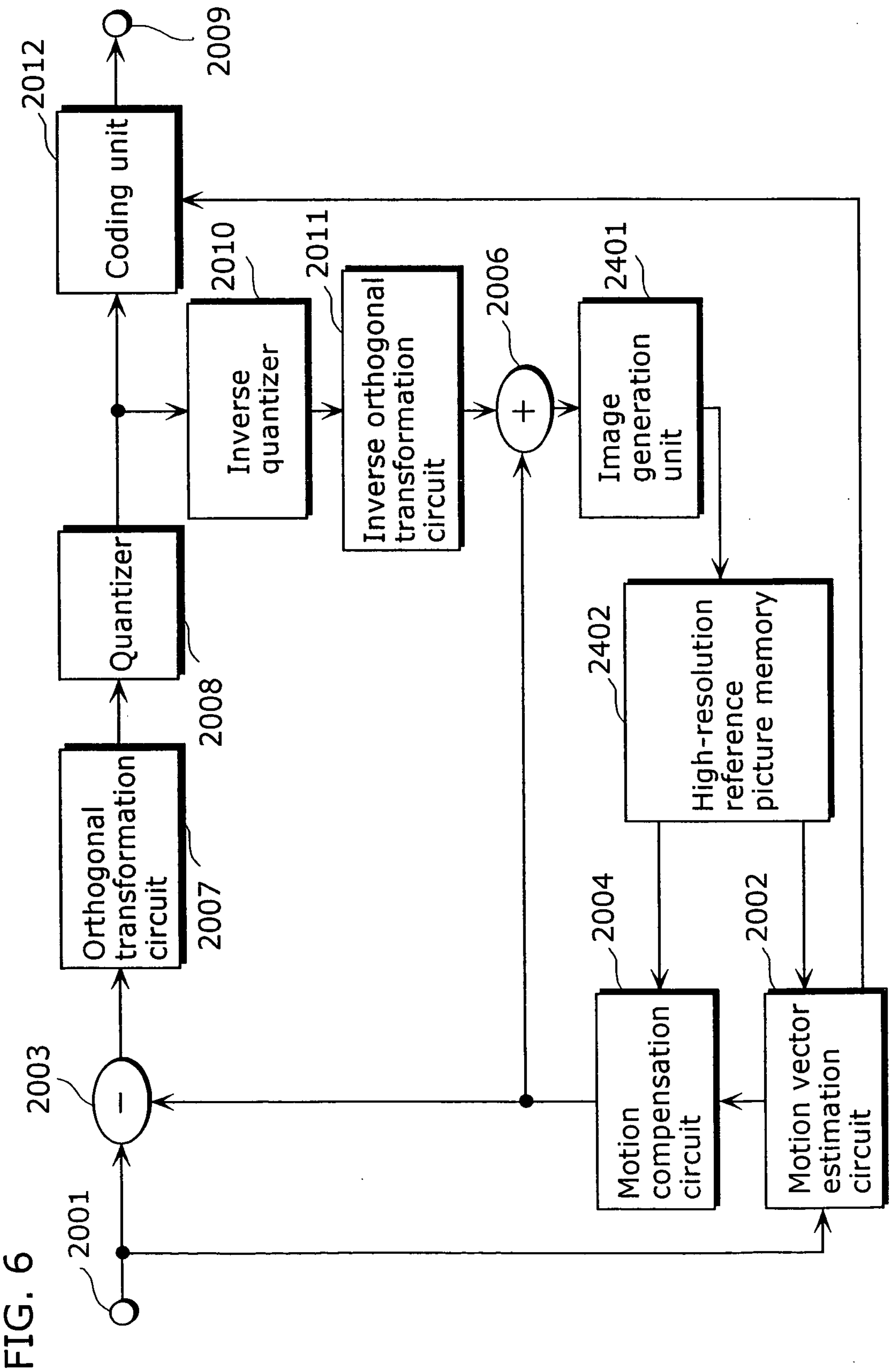
Coding unit
Quantizer
Orthogonal transformation circuit
Inverse quantizer
Inverse orthogonal transformation circuit
Image generation unit
High-resolution reference picture memory
Motion compensation circuit
Motion vector estimation circuit
2001
2002
2003
2004
2006
2007
2008
2009
2010
2011
2012
2401
2402

FIG. 7

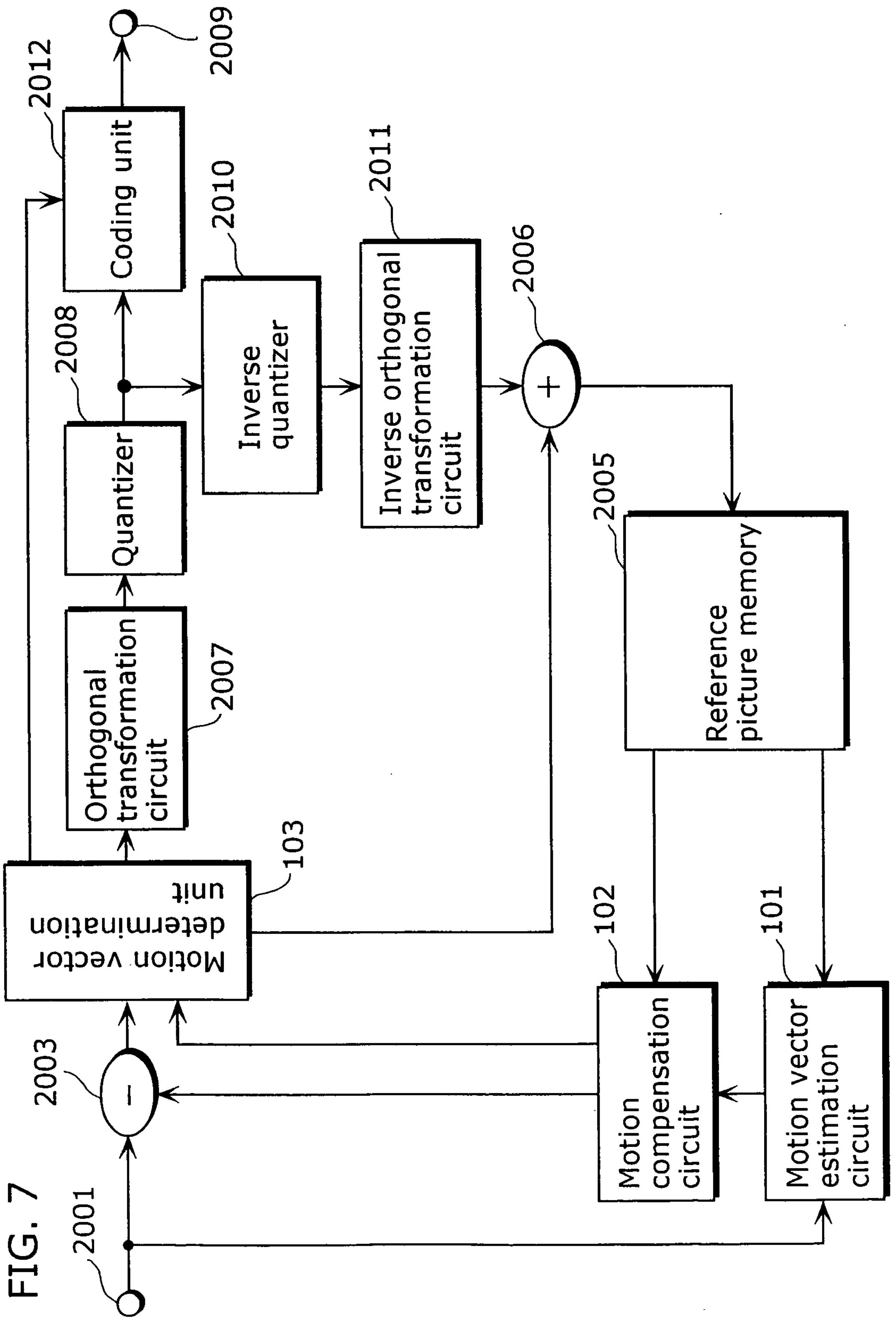
2001
2003
2009
2012
Coding unit
2008
Quantizer
2010
Inverse quantizer
2011
Inverse orthogonal transformation circuit
2006
+
−
2005
Reference picture memory
Orthogonal transformation circuit
2007
Motion vector determination unit
103
102
Motion compensation circuit
101
Motion vector estimation circuit

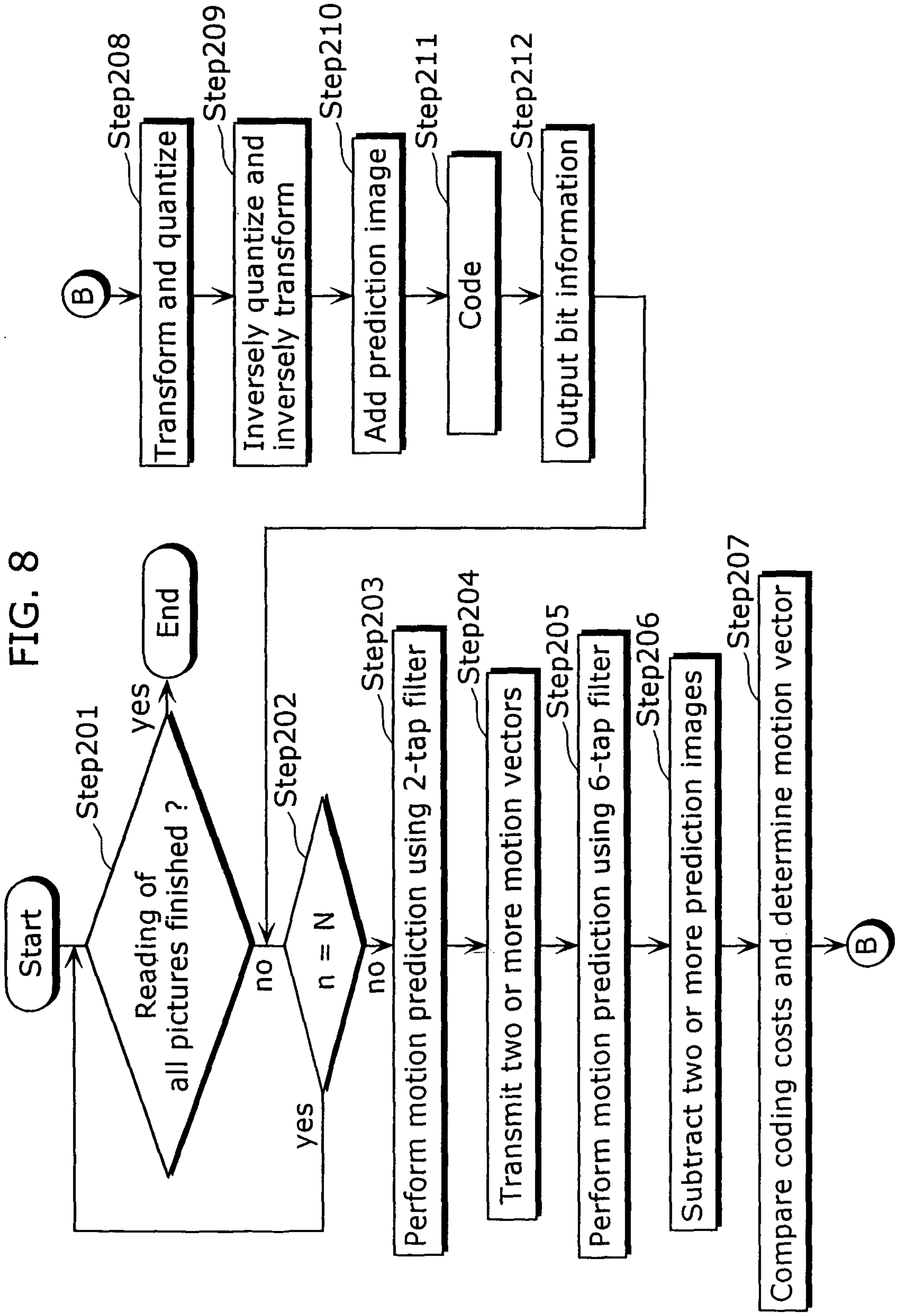
Start
Reading of all pictures finished ?
Step201
yes
no
End
n = N
Step202
yes
no
Perform motion prediction using 2-tap filter
Step203
Transmit two or more motion vectors
Step204
Perform motion prediction using 6-tap filter
Step205
Subtract two or more prediction images
Step206
Compare coding costs and determine motion vector
Step207
B
Transform and quantize
Step208
Inversely quantize and inversely transform
Step209
Add prediction image
Step210
Code
Step211
Output bit information
Step212

FIG. 8

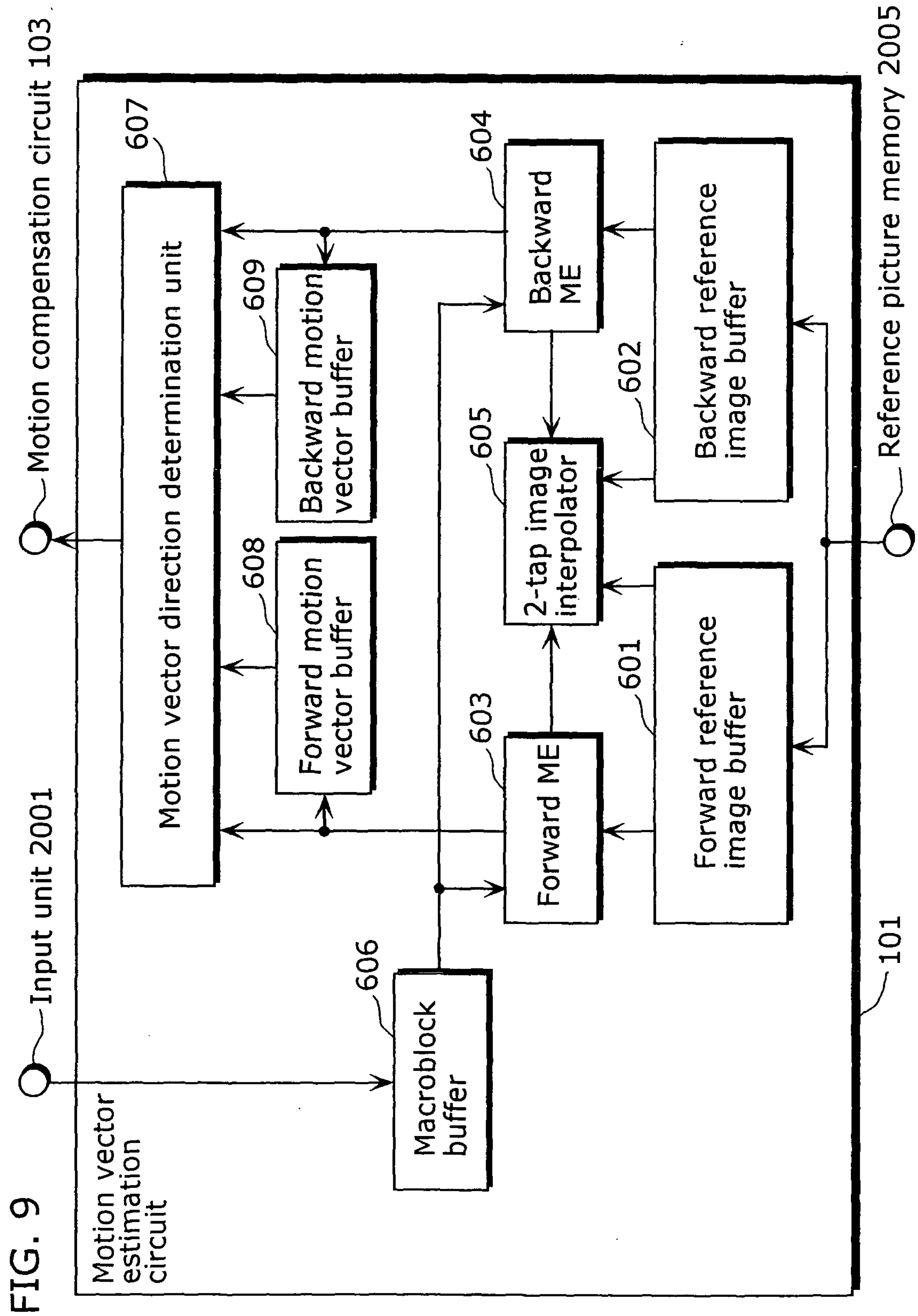
Motion vector estimation circuit
Input unit 2001
Motion compensation circuit 103
Reference picture memory 2005
Macroblock buffer
606
Motion vector direction determination unit
607
Forward motion vector buffer
608
Backward motion vector buffer
609
Forward ME
603
Backward ME
604
2-tap image interpolator
605
Forward reference image buffer
601
Backward reference image buffer
602
101

FIG. 9

FIG. 10

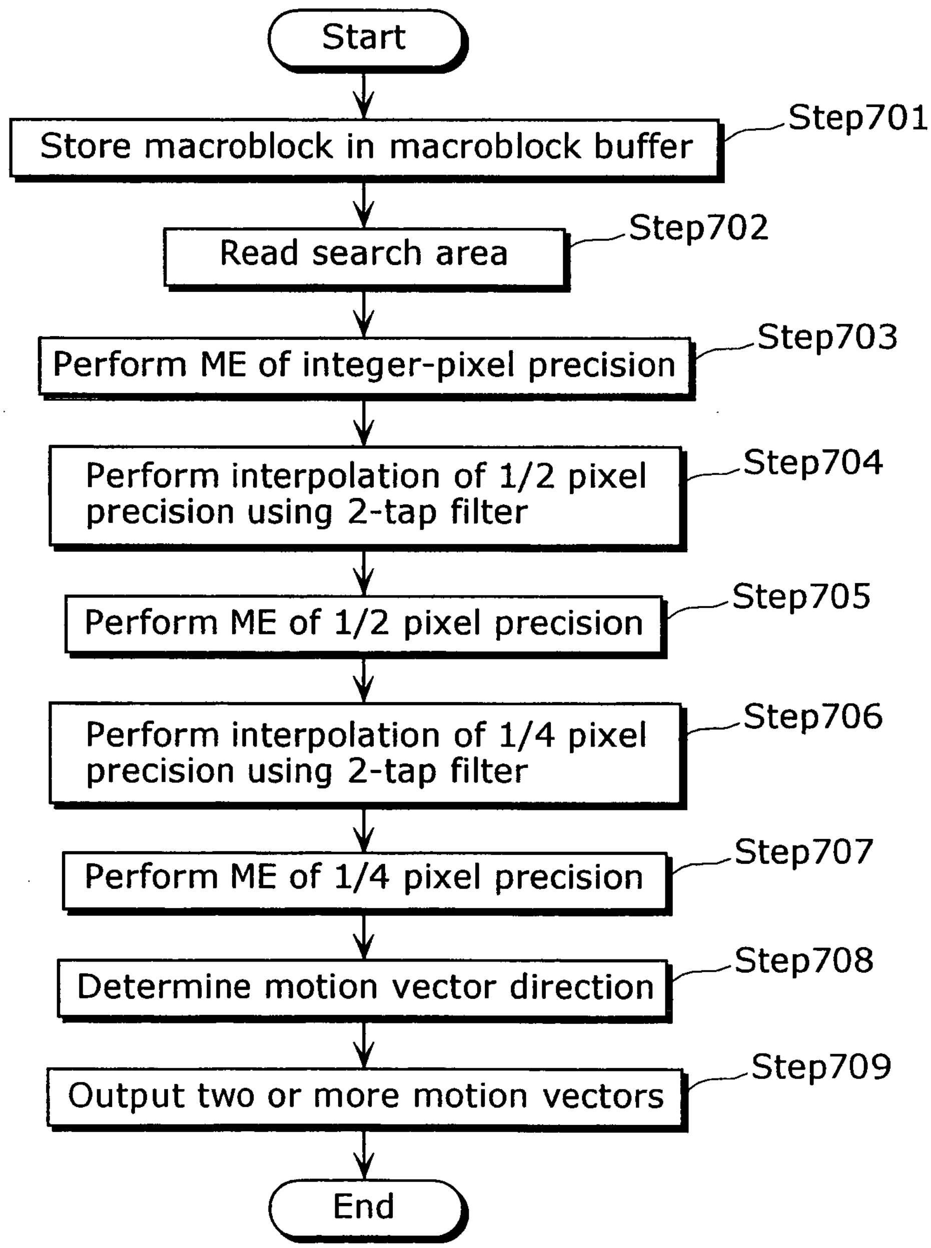
Start
Store macroblock in macroblock buffer
Step701
Read search area
Step702
Perform ME of integer-pixel precision
Step703
Perform interpolation of 1/2 pixel precision using 2-tap filter
Step704
Perform ME of 1/2 pixel precision
Step705
Perform interpolation of 1/4 pixel precision using 2-tap filter
Step706
Perform ME of 1/4 pixel precision
Step707
Determine motion vector direction
Step708
Output two or more motion vectors
Step709
End

FIG. 11

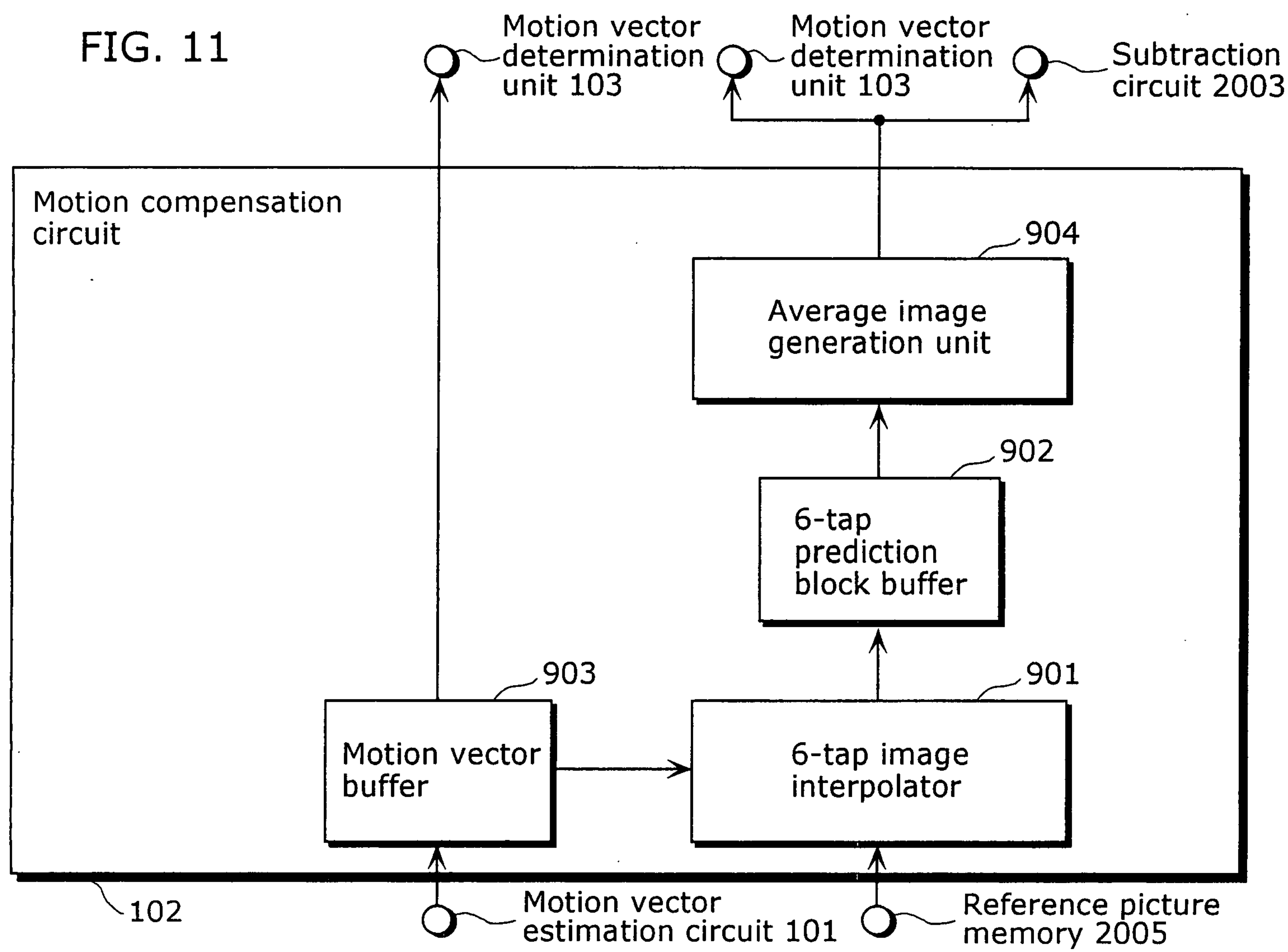
Motion vector determination unit 103
Motion vector determination unit 103
Subtraction circuit 2003
Motion compensation circuit
904
Average image generation unit
902
6-tap prediction block buffer
903
901
Motion vector buffer
6-tap image interpolator
102
Motion vector estimation circuit 101
Reference picture memory 2005

FIG. 12

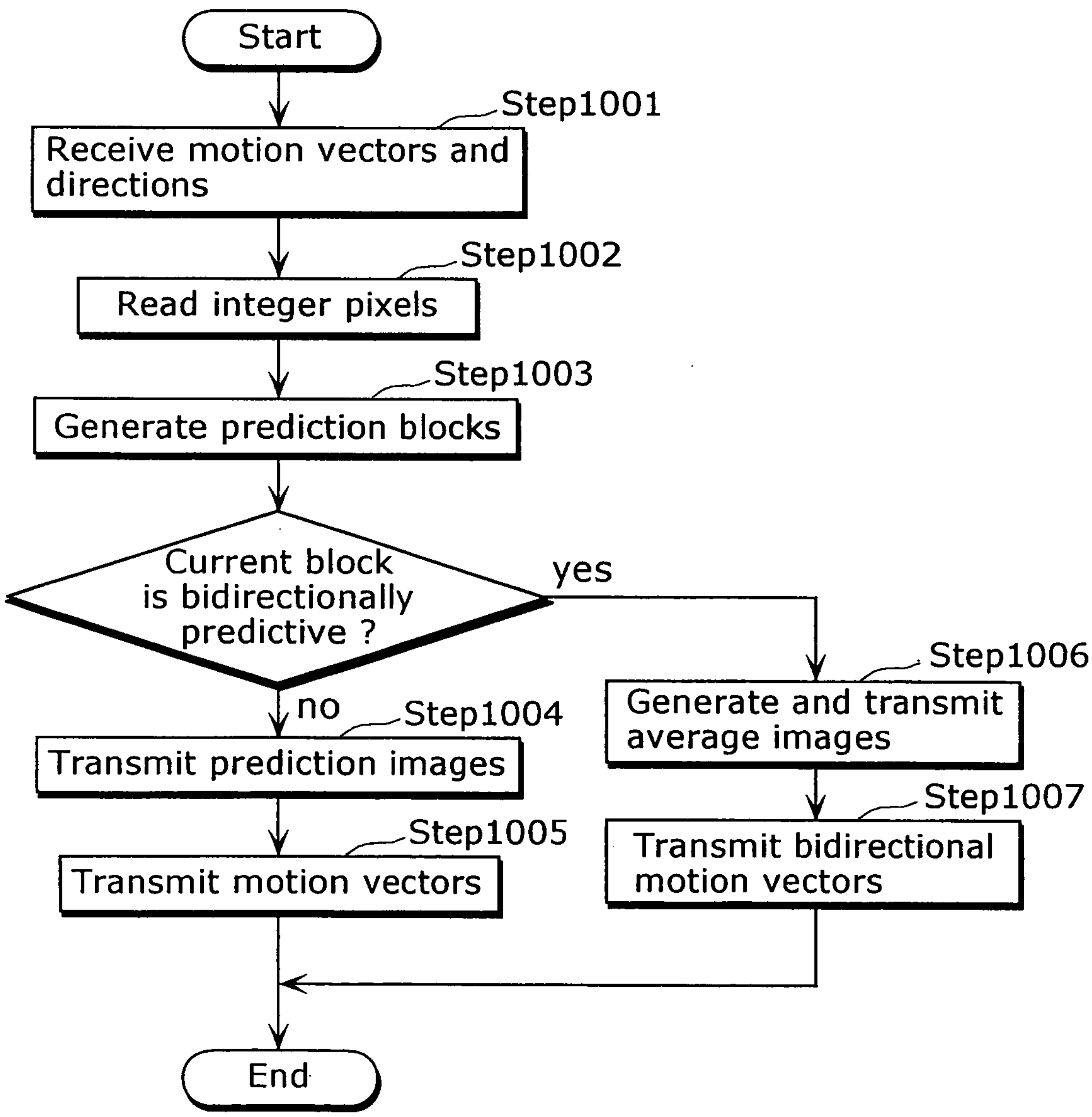
Start
Step1001
Receive motion vectors and directions
Step1002
Read integer pixels
Step1003
Generate prediction blocks
Current block is bidirectionally predictive ?
yes
no
Step1004
Transmit prediction images
Step1005
Transmit motion vectors
Step1006
Generate and transmit average images
Step1007
Transmit bidirectional motion vectors
End

FIG. 13

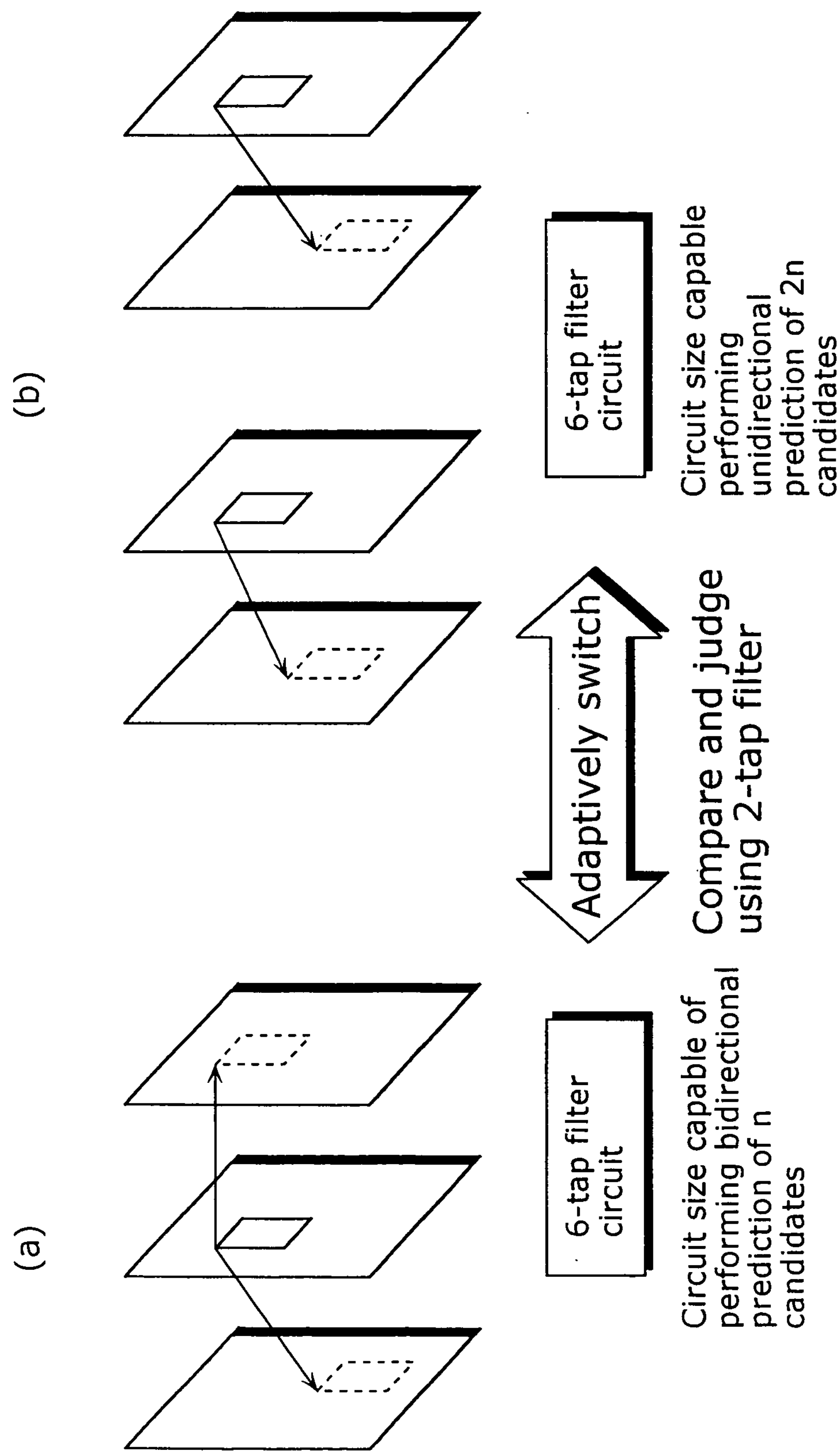
(a)
6-tap filter circuit
Circuit size capable of performing bidirectional prediction of n candidates
Adaptively switch
Compare and judge using 2-tap filter
(b)
6-tap filter circuit
Circuit size capable performing unidirectional prediction of 2n candidates

FIG. 14

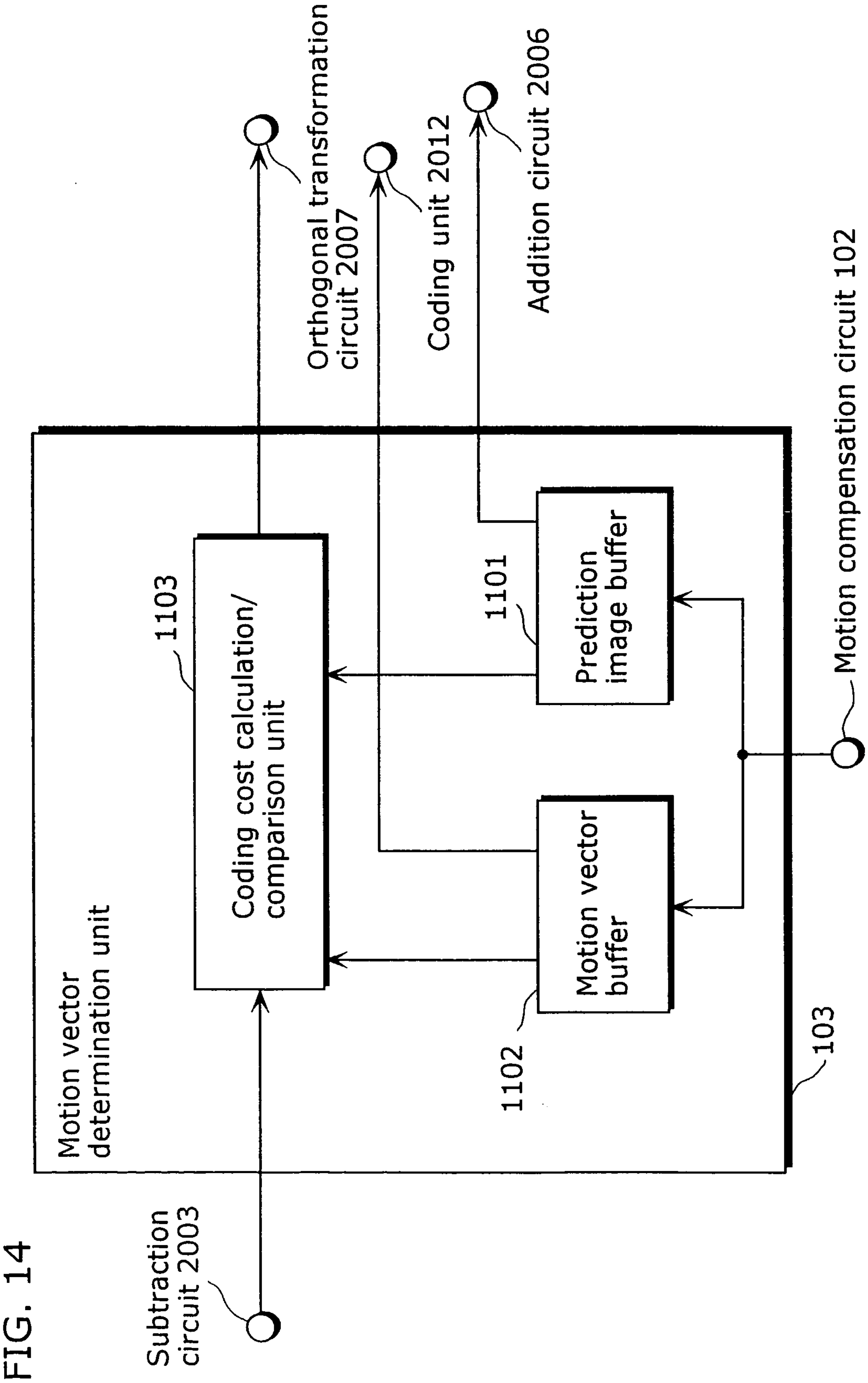
Subtraction circuit 2003
Motion vector determination unit
Coding cost calculation/ comparison unit
1103
Orthogonal transformation circuit 2007
Coding unit 2012
Addition circuit 2006
Prediction image buffer
1101
Motion vector buffer
1102
103
Motion compensation circuit 102

FIG. 15

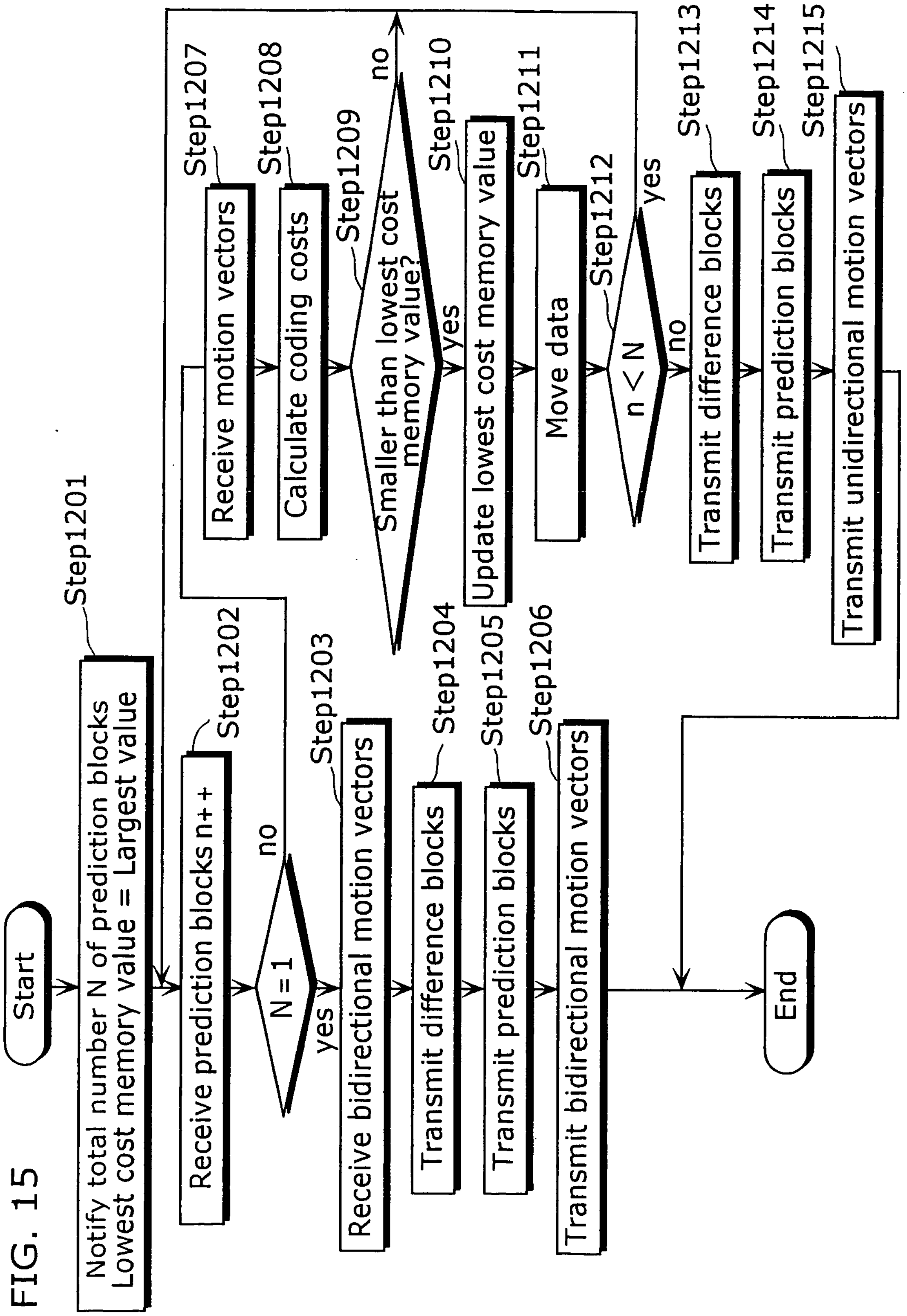
Start
Notify total number N of prediction blocks
Lowest cost memory value = Largest value
Step1201
Receive prediction blocks n++
Step1202
N=1
yes
no
Receive bidirectional motion vectors
Step1203
Transmit difference blocks
Step1204
Transmit prediction blocks
Step1205
Transmit bidirectional motion vectors
Step1206
Receive motion vectors
Step1207
Calculate coding costs
Step1208
Smaller than lowest cost memory value?
Step1209
yes
no
Update lowest cost memory value
Step1210
Move data
Step1211
n < N
Step1212
yes
no
Transmit difference blocks
Step1213
Transmit prediction blocks
Step1214
Transmit unidirectional motion vectors
Step1215
End

FIG. 16

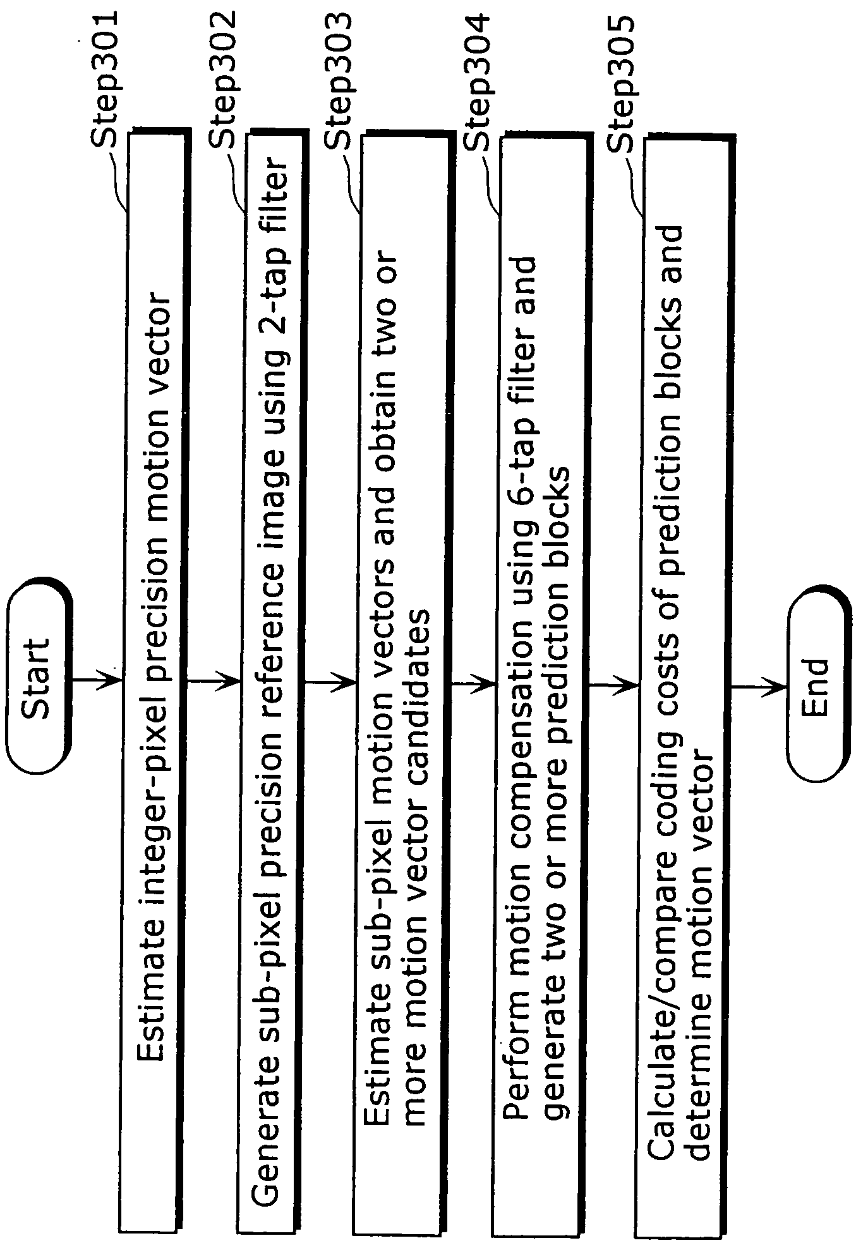
Start
Estimate integer-pixel precision motion vector
Step301
Generate sub-pixel precision reference image using 2-tap filter
Step302
Estimate sub-pixel motion vectors and obtain two or more motion vector candidates
Step303
Perform motion compensation using 6-tap filter and generate two or more prediction blocks
Step304
Calculate/compare coding costs of prediction blocks and determine motion vector
Step305
End

Fig. 17A

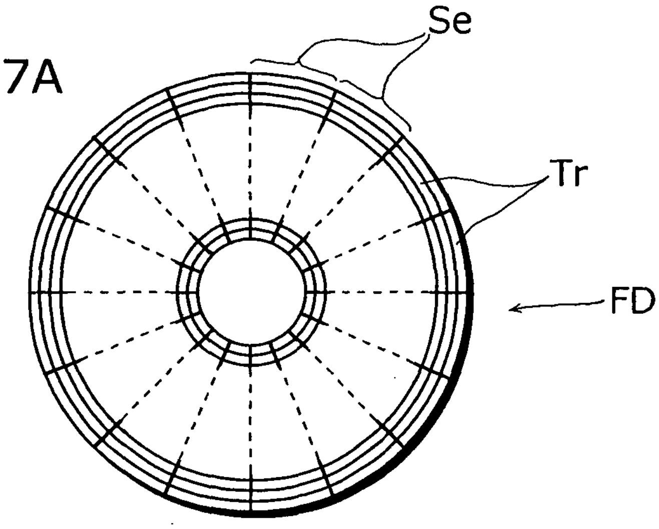


Fig. 17B

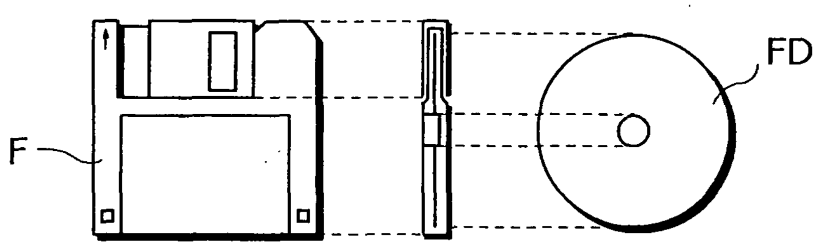


Fig. 17C

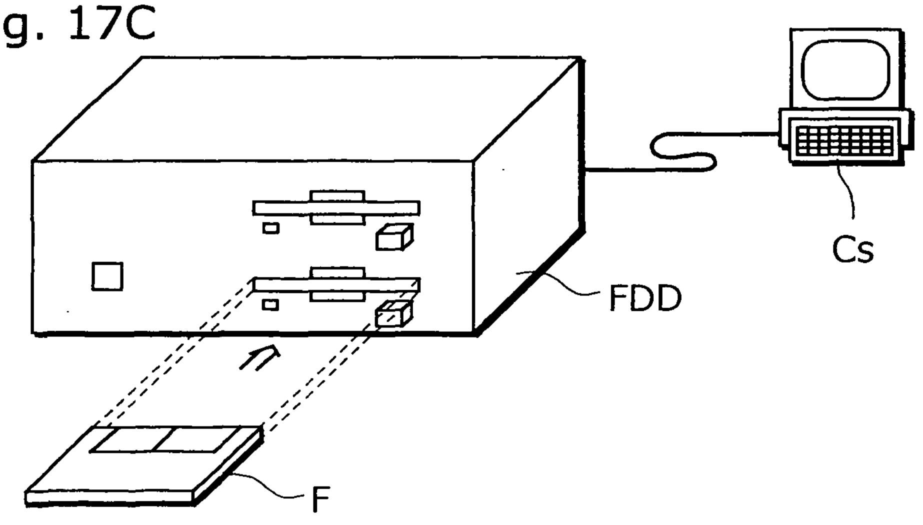

Fig. 18

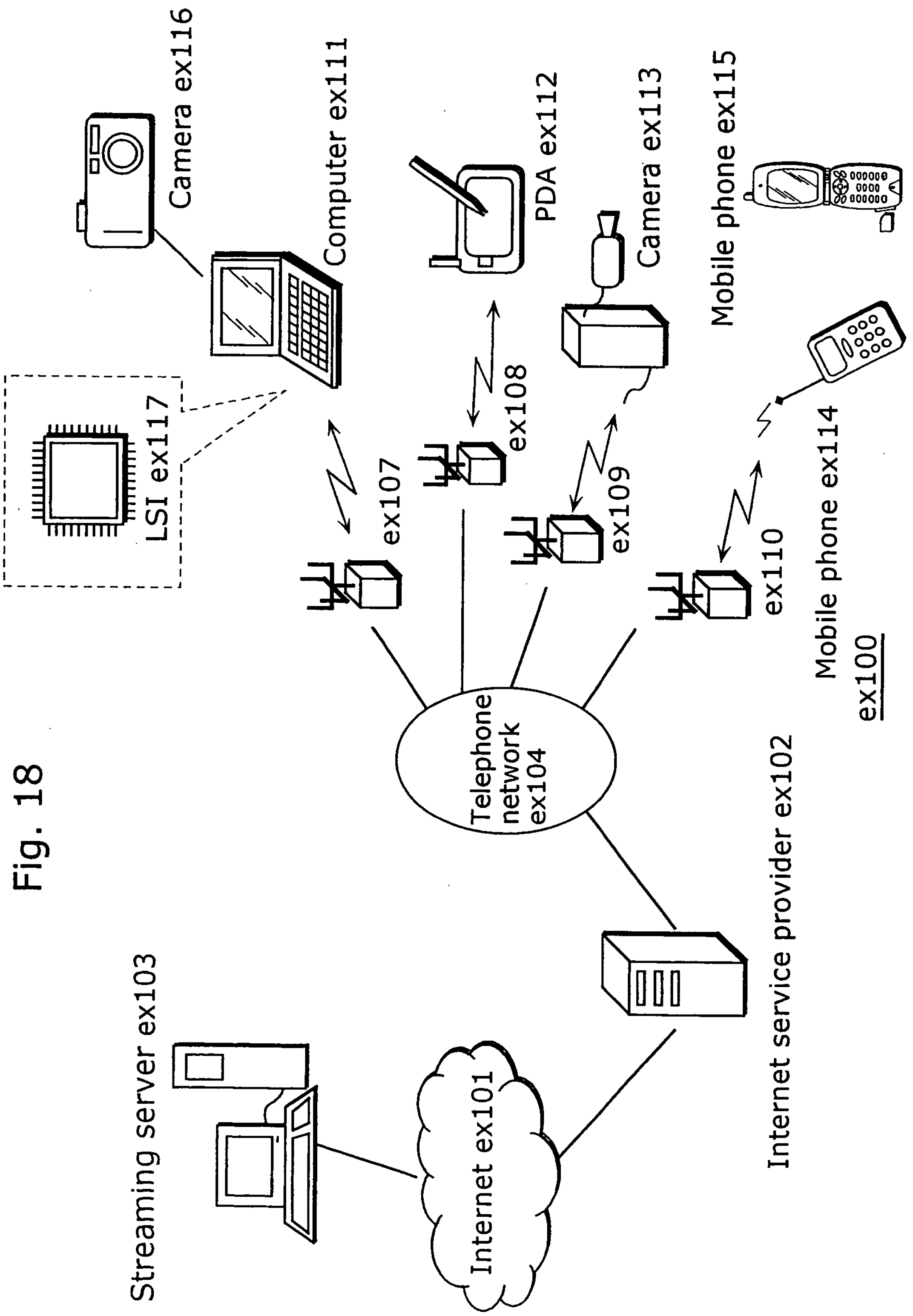
Camera ex116
Computer ex111
LSI ex117
PDA ex112
Camera ex113
Mobile phone ex115
ex107
ex108
ex109
ex110
Mobile phone ex114
ex100
Telephone network ex104
Internet service provider ex102
Streaming server ex103
Internet ex101

Fig. 19

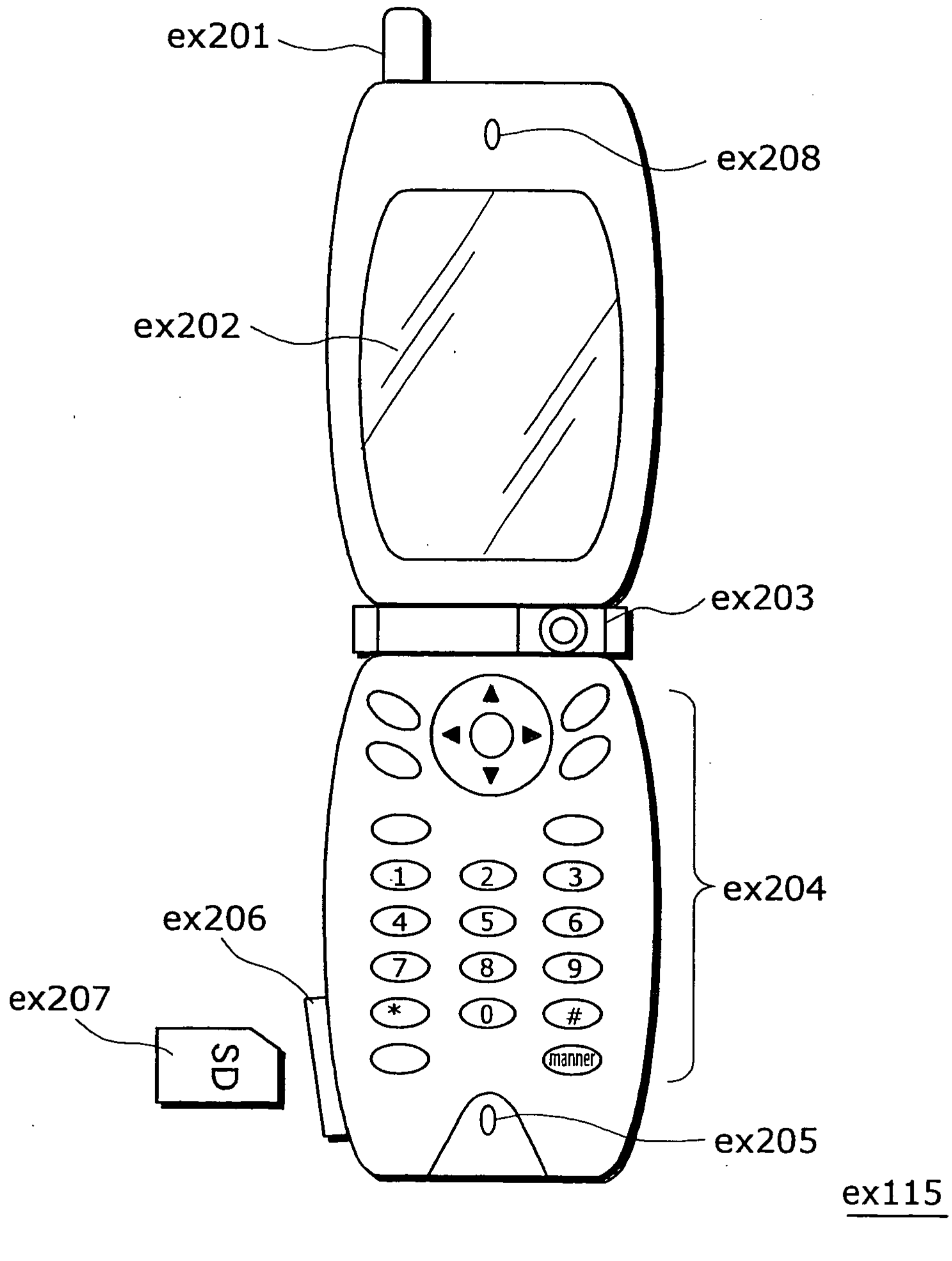
ex201
ex208
ex202
ex203
ex204
ex206
ex207
SD
1
2
3
4
5
6
7
8
9
*
0
#
manner
ex205
ex115

Fig. 20

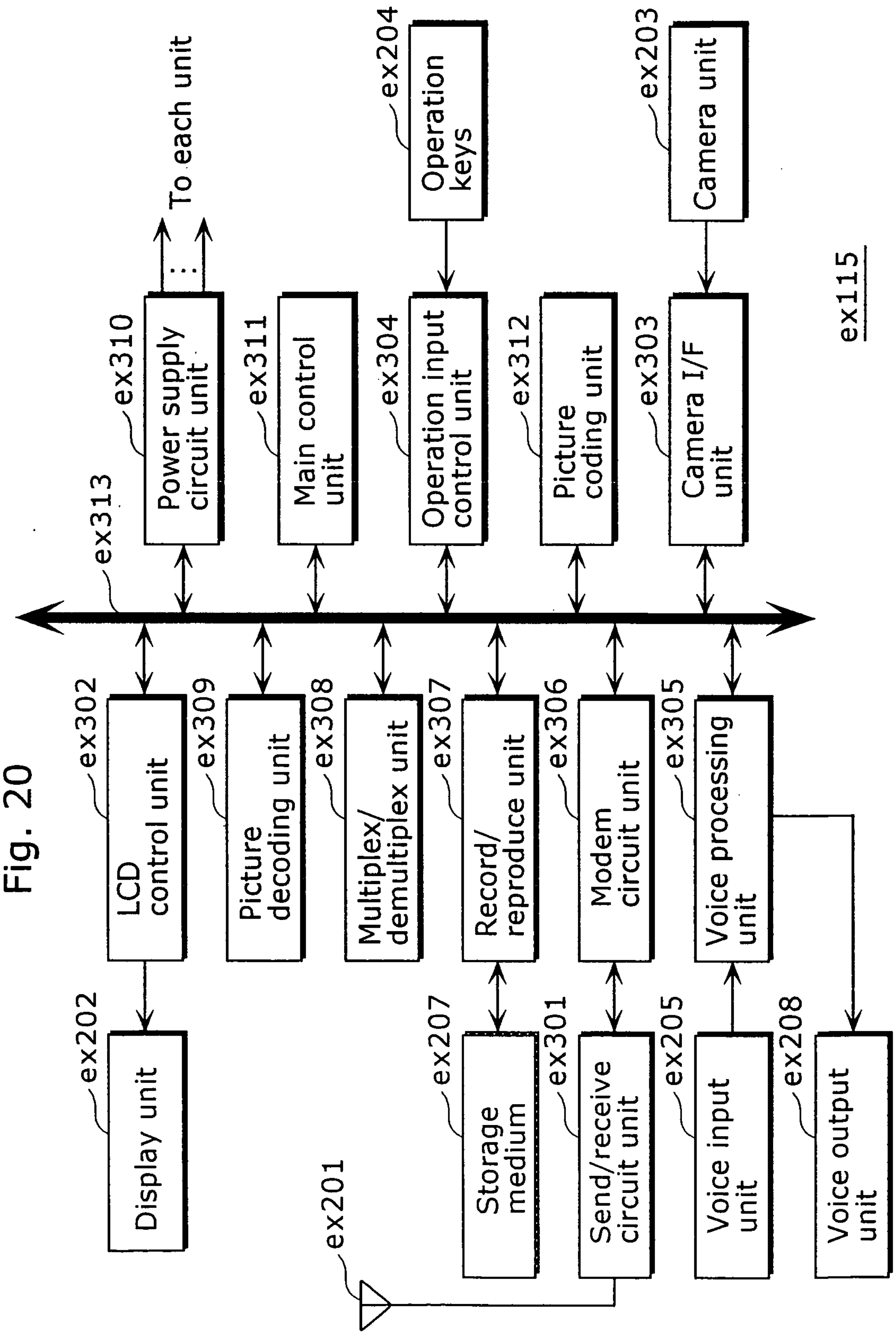
ex313
ex310
Power supply circuit unit
To each unit
ex311
Main control unit
ex304
Operation input control unit
ex204
Operation keys
ex312
Picture coding unit
ex303
Camera I/F unit
ex203
Camera unit
ex115
ex302
LCD control unit
ex309
Picture decoding unit
ex308
Multiplex/demultiplex unit
ex307
Record/reproduce unit
ex306
Modem circuit unit
ex305
Voice processing unit
ex202
Display unit
ex207
Storage medium
ex301
Send/receive circuit unit
ex205
Voice input unit
ex208
Voice output unit
ex201

Fig. 21

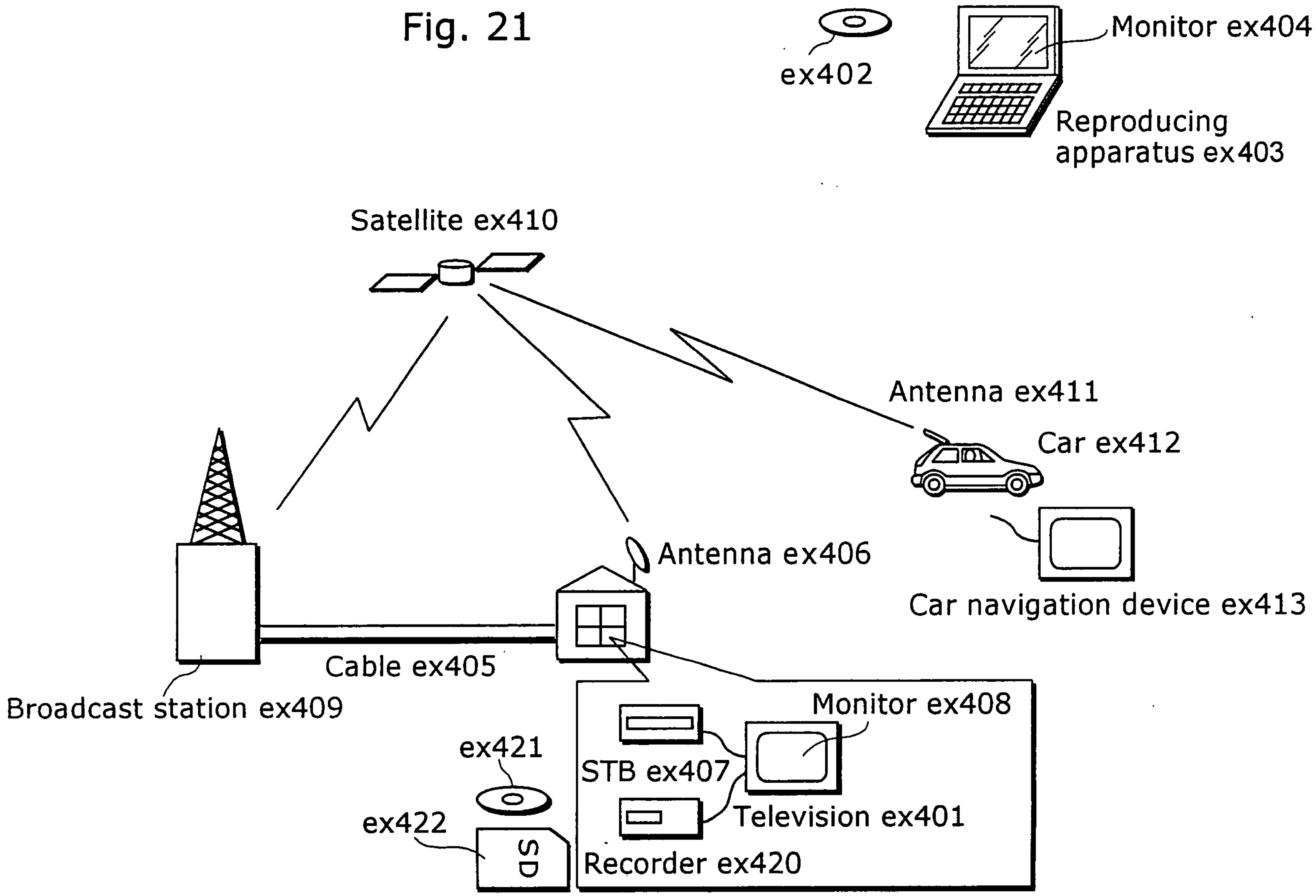
ex402
Monitor ex404
Reproducing apparatus ex403
Satellite ex410
Antenna ex411
Car ex412
Car navigation device ex413
Antenna ex406
Broadcast station ex409
Cable ex405
Monitor ex408
STB ex407
Television ex401
Recorder ex420
ex421
ex422
SD